# EUROPEAN PATENT SPECIFICATION

(11) **EP 1 363 967 B1**
(45) Date of publication and mention of the grant of the patent: **12.04.2006**
(21) Application number: 02731082.0
(22) Date of filing: 29.01.2002
(51) Int. Cl.: C08J 5/12, C09J 165/00, C08G 61/08, C09J 7/02

(54) **IMPROVED FIBER SUBSTRATE ADHESION TO ELASTOMERIC SUBSTRATES**
VERBESSERTE FASERSUBSTRATHAFTUNG AN ELASTOMERE SUBSTRATE
AMELIORATION DE L'ADHESION DE SUBSTRATS FIBREUX AUX SUBSTRATS ELASTOMERES

(30) Priority: 29.01.2001 US 772157
(43) Date of publication of application: 26.11.2003
(73) Proprietor: LORD CORPORATION, Cary, NC 27512-8012 (US)
(72) Inventor: TOKAS, Edward, F., Cary, NC 27513 (US); CASTER, Kenneth, C., Apex, NC 27502 (US)
(74) Representative: Weber, Thomas
(86) International application number: PCT/US2002/002612
(87) International publication number: WO 2002/077078

(56) References cited:
- EP-A- 0 424 833
- WO-A-02/26857

## Description

### Background of the Invention

The present invention relates to a method of bonding or coating a material to a substrate surface and to bonding together two elastomeric substrate surfaces.

Despite a long history of adhesive and coating development, a need continues to exist for adhesives and coatings that provide increasingly higher bonding strengths under increasingly adverse conditions on an increasing variety of substrate surfaces.

A particular need exists for environmentally friendly aqueous or waterbome adhesive systems that avoid the use of volatile organic solvents. It has thus far been relatively difficult to develop aqueous adhesives that perform at a level equal to traditional solvent-based adhesives. One major problem associated with bonds formed from an aqueous adhesive is the relative susceptibility of the bonds to high temperature fluids and corrosive materials. Another need continues to exist for coatings or adhesives that deliver superior bonding capability at an inexpensive material cost. A further need exists for coatings or adhesives that can be applied with relatively few steps and minimal energy use. A few markets that are especially in need of a superior adhesive or coating are described below.

The manufacturing of articles, parts or assemblies that include an elastomer substrate surface bonded to another substrate surface (either another elastomer substrate or a non-elastomer substrate) typically involves placing the non-elastomer substrate in a mold, introducing a molten or liquid non-vulcanized (i.e., uncured) elastomer into the mold and then applying heat and pressure to simultaneously vulcanize the elastomer and bond it to the non-elastomer substrate. There are problems, however, with such vulcanization bonding. The molds often require a complicated design and interior profile, curing of the elastomer is slowed, there can be no incorporation of pre-compressed elastomer parts into the assembly, the assemblies undergo thermal stress, the product exiting the mold often has extra flashing that must be removed, any subsequent addition of more molded parts can significantly deteriorate the previously formed adhesive bond and there is limited process flexibility.

It would be advantageous under certain circumstances to bond the elastomer substrate surface to the other elastomeric substrate surface after the elastomer substrate has been fully cured or vulcanized. This post-vulcanization bonding is sometimes referred to in the art as cold bonding. However, post-vulcanization bonding is one noticeable area in which adequate adhesive bonding is lacking, particularly when bonding to substrates made from different materials, especially metal or low surface energy materials. For example, cured ethylene-propylene-diene terpolymer rubber ("EPDM") has a low surface energy that makes wetting difficult and it includes a relatively low amount of sites such as carbon-carbon double bonds that are useful in subsequent bonding. Adhesive bonding to post-vulcanized or cured elastomers has met with limited success. Cyanoacrylate adhesives are used for post-vulcanization bonding but these suffer from well known problems in more demanding industrial applications that are subjected to harsh environmental conditions. For example, cyanoacrylates suffer from poor heat resistance, solvent resistance and flexibility (see Handbook of Adhesives, edited by Skeist, I., pp. 473-476 (3d ed. 1990)). Other post-vulcanization adhesives are solvent-based and require high temperature and long curing times. Epoxy or urethane adhesives typically require elastomer surface pretreatment such as with oxidizing flames, oxidizing chemicals or electrical/plasma discharges in order to improve bonding. These pretreatment methods, however, are costly and time consuming.

The problems outlined above with current post-vulcanization adhesive bonding indicate that there is a long-felt need for an improved post-vulcanization adhesive bonding technique.

Another adhesive bonding area in which there continues to be a need is bonding to SANTOPRENE®, a commonly-used thermoplastic elastomer ("TPE") commercially available from Advanced Elastomer Systems. Pre-cured and cured SANTOPRENE® TPE is particularly difficult to adhesively bond because it has a polyolefinic thermoplastic continuous matrix (similar to polyolefinic materials like polyethylene and polypropylene) that has an especially low surface energy of 28-30 dynes/cm according to U.S.-A-5,609,962. Bonding to more polar substrates such as metal and glass is practically impossible.

There also is a need in the art for coatings and adhesives, which may be applied, directly to fibers, threads, mono- and multi-filaments, yarns and fabrics. Improved adhesion is desirable for a coating on a fiber, for an adhesive for bonding one fiber to another and for an adhesive for bonding a fiber to another substrate. For example, there is a need in the art for improved adhesion when bonding polymer, cellulose or steel tire cord-to-rubber for vehicle tire applications, belts or hoses, bonding fiberglass reinforcement materials or carbon fibers or polyethylene fibers within composite materials, and for bonding fiber containing composite materials in general.

It also would be advantageous to have a coating that can be applied without heat or extensive surface pretreatment, coat substrate materials that cannot currently be coated, has improved adhesion to the substrate surface and provide a waterbome coating for thermoplastic olefins that does not require heating.

WO-A-02/26857 which represents a prior art under Article 54 (3)/(4) EPC discloses to coat a fibrous substrate with a polymer obtained by a metathesis reaction of a metathesizable material which coated substrate is then sandwiched between and bonded to outer elastomer layers to form a composite multilayer structure.

### Summary of the Invention

According to the present invention there is provided
a method for bonding a fibrous substrate between a second and a third elastomer substrate comprising:
   (a) providing a catalyst at the fibrous substrate surface;
   (b) contacting the catalyst on the fibrous substrate surface with a metathesizable material so that the metathesizable material undergoes a metathesis reaction forming a polymer coated fibrous substrate;
   (c) sandwiching the polymer coated fibrous substrate between the second and third substrate surface;
   (d) placing the composite material obtained by step (c) in a mold ; and
   (e) curing the composite material under heat and pressure.

There is also provided a manufactured article comprising a fibrous substrate sandwiched between and bonded to a second substrate and a third substrate and an adhesive layer interposed between the fibrous substrate and the second substrate and the third substrate wherein the second and third substrates comprise a rubber material and the adhesive layer comprises a metathesis polymer.

The invention offers the unique ability to form a strong adhesive bond on a variety of substrate surfaces (including difficult-to-bond post-vulcanized elastomeric materials and thermoplastic elastomers) at normal ambient conditions with a minimal number of steps and surface preparation. The method also avoids the use of volatile organic solvents since it is substantially 100 percent reactive and/or can be done with aqueous carrier fluids.

### Detailed Description of the Preferred Embodiments

Unless otherwise indicated, description of components in chemical nomenclature refers to the components at the time of addition to any combination specified in the description, but does not necessarily preclude chemical interactions among the components of a mixture once mixed.

As used herein, the following terms have certain meanings:
"ADMET" means acyclic diene olefin metathesis;
"catalyst" also includes initiators, co-catalysts and promoters;
"coating" includes a coating that is intended to be the final or outer coating on a substrate surface and a coating that is intended to be a primer for a subsequent coating;
"fibrous substrate" means a woven or non-woven fabric, a monofilament, a multifilament yarn or a fiber cord;
"filmogenic" means the ability of a material to form a substantially continuous film on a surface;
"metathesizable material" means a single or multi-component composition that includes at least one component that is capable of undergoing a metathesis reaction;
"non-fibrous substrate" means any substrate type other than a fiber (non-fibrous substrate includes a composite substrate that includes fibers as one component such as fiber-reinforced plastics);
"normal ambient conditions" means temperatures typically found in minimal atmosphere control workplaces (for example, -20°C to 40°C), pressure of approximately 1 atmosphere and an air atmosphere that contains a certain amount of moisture;
"ROMP" means ring-opening metathesis polymerization;
"room temperature" means 10°C to 40°C, typically 20°C to 25°C;
"substantially cured elastomer" and "post-vulcanized elastomer" are used interchangeably and means thermoset polymers above T_{g} for that polymer and thermoplastic polyolefins (substantially cured or post-vulcanized elastomers typically are not capable of flow); and
"surface" means a region of a substrate represented by the outermost portion of the substrate defined by material/air interface and extending into the substrate from about 1 atomic layer to many thousands of atomic layers.

The bonding or coating adhering that takes place according to the present invention occurs via a metathesis reaction. Various metathesis reactions are described in Ivin, K.J. and Mol, J.C., Olefin Metathesis and Metathesis Polymerization (Academic Press 1997). The metathesis reaction could be a cross-metathesis reaction, an ADMET, a ring-closing metathesis reaction or, preferably, a ROMP. It should be recognized that the surface metathesis polymerization that occurs in this invention is very different than bulk (including reaction injection molding), emulsion or solution metathesis polymerization in which a metathesizable monomer and a catalyst are mixed together into a single composition to effect the metathesis reaction. Bulk metathesis polymerization, particularly reaction injection molding, of norbornene monomer for producing molded articles made of the resulting polynorbornene is known. For example, U.S.- A-4,902,560 teaches a method for making a glass fiber-reinforced polydicyclopentadiene article that involves saturating an uncoated woven glass fabric with a polymerizable liquid that includes dicyclopentadiene monomer and catalyst, subjecting the saturated fabric to reaction injection molding and post-curing the resultant structure. According to the present invention, the resulting metathesis polymer forms a filmogenic adhesive or coating rather than a molded article.

The metathesizable material used in the invention is any material that is capable of undergoing metathesis when contacted with a proper catalyst. The metathesizable material may be a monomer, oligomer, polymer or mixtures thereof. Preferred metathesizable materials are those that include at least one metathesis reactive functional group such as olefinic materials. The metathesizable material or component can have a metathesis reactive moiety functionality ranging from 1 to 1000, preferably from 1 to 100, more preferably from 1 to 10 mol metathesizable moiety/mol molecule of metathesizable component. In addition, materials capable of undergoing ROMP typically have "inherent ring strain" as described in Ivin et al, at page 224, with relief of this ring strain being the driving force for the polymerization. Materials capable of undergoing ADMET typically have terminal or near-terminal unsaturation.

Illustrative metathesizable materials are those that include an unsaturated functional group such as ethene, α-alkenes, acyclic alkenes (i.e., alkenes with unsaturation at β-position or higher), acyclic dienes, acetylenes, cyclic alkenes and cyclic polyenes. Cyclic alkenes and cyclic polyenes, especially cycloolefins, are preferred. When cyclic alkenes or polyenes are the metathesizable material, the metathesis reaction is a ROMP.

A monomer or oligomer is particularly useful when the metathesizable material itself is intended to form a coating on the substrate surface or when the metathesizable material itself is intended to act as an adhesive for bonding one substrate surface to another substrate surface. Monomers are especially useful because they can diffuse into the substrate surface when they are applied. Particularly useful as monomers by themselves, as monomers for making oligomers, or for functionalizing other types of polymers, are cycloolefins such as norbornene, cycloalkenes, cycloalkadienes, cycloalkatrienes, cycloalkatetraenes, aromatic-containing cycloolefins and mixtures thereof. Illustrative cycloalkenes include cyclooctene, hexacycloheptadecene, cyclopropene, cyclobutene, cyclopentene, cyclohexene, cycloheptene, cyclononene, cyclodecene, cyclododecene, paracyclophene, and ferrocenophene. Illustrative cycloalkadienes include cyclooctadiene and cyclohexadiene. Illustrative cycloalkatrienes include cyclooctatriene. Illustrative cycloalkatetraenes include cyclooctatetraene.

Norbornene monomers are especially suitable. As used herein, "norbomene" means any compound that includes a norbornene ring moiety, including norbornene per se, norbomadiene, substituted norbomenes, and polycyclic norbornenes. As used herein, "substituted norbornene" means a molecule with a norbornene ring moiety and at least one substituent group. As used herein, "polycyclic norbornene" mean a molecule with a norbornene ring moiety and at least one additional fused ring. Illustrative norbomenes include those having structures represented by the following formulae: 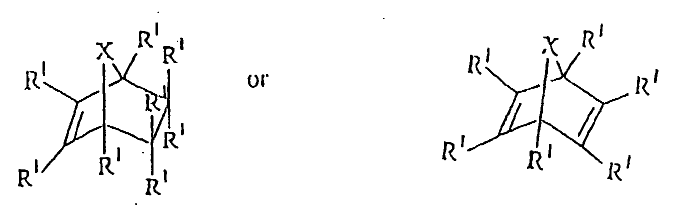 or 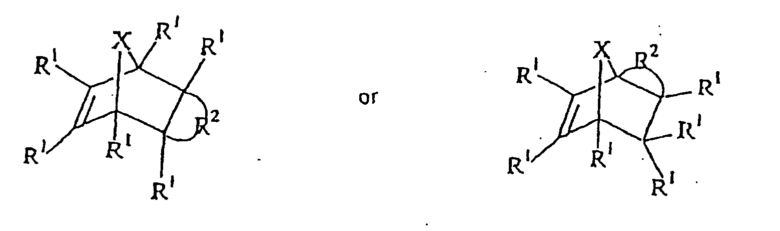 or 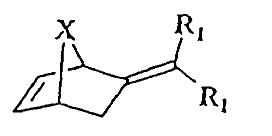 wherein X is CH₂, CHR³, C(R³)₂, O, S, N-R³, P-R³, O=P-R³, Si(R³)₂, B-R³ or As-R³; each R¹ is independently H, CH₂, alkyl, alkenyl (such as vinyl or allyl), cycloalkyl, cycloalkenyl, aryl, alkaryl, aralkyl, halogen, halogenated alkyl, halogenated alkenyl, alkoxy, oxyalkyl, carboxyl, carbonyl, amido, (meth)acrylate-containing group, anhydride containing group, thioalkoxy, sulfoxide, nitro, hydroxy, keto, carbamato, sulfonyl, sulfinyl, carboxylate, silanyl, cyano or imido; R² is a fused aromatic, aliphatic or hetero cyclic or polycyclic ring; and R³ is alkyl, alkenyl, cycloalkyl, cycloalkenyl, aryl, alkaryl, aralkyl or alkoxy. The carbon-containing R groups may have up to 20 carbon atoms.

Exemplary substituted norbornene monomers include methylidenenorbornene, 5-methyl-2-norbornene, 5,6-dimethyl-2-norbornene, 5-ethyl-2-noaornene, 5-butyl-2-norbornene, 5-hexyl-2-norbornene, 5-octyl-2-norbomene, ethylidenenorbornene, 5-dodecyl-2-norbornene, 5-isobutyl-2-norbornene, 5-octadecyl-2-norbornene, 5-isopropyl-2-norbornene, 5-phenyl-2-norbornene, 5-p-toluyl-2-norbornene, 5-α-naphthyl-2-norbornene, 5-cyclohexyl-2-norbornene, 5-isopropenyl-norbornene, 5-vinyl-norbornene, 5,5-dimethyl-2-norbornene, 5-norbornene-2-carbonitrile, 5-triethoxysilyl-2-norbornene, 5-norborn-2-yl acetate, 7-oxanorbornene, 5-norbornene-2,3-carboxylic acid, 5-norbornene-2,2-dimethanol, 2-benzoyl-5-norbornene, 5-norbornene-2-methanol acrylate, 2,3-di(chloromethyl)-5-norbornene, 2,3-hydroxymethyl-5-norbornene di-acetate and their stereoisomers and mixtures thereof.

Exemplary polycyclic norbornene monomers include tricyclic monomers such as dicyclopentadiene and dihydrodicyclopentadiene, tetracyclic monomers such as tricyclopentadiene, pentacyclic monomers such as tetracyclopentadiene and tetracyclododecene, hexacyclic monomers such as pentacyclopentadiene, heptacyclic monomers such as hexacycloheptadecene, and the Corresponding substituted polycyclic norbornenes. Structures of exemplary cycloolefins including polycyclic, bicyclic or monocyclic cycloolefins are shown below.

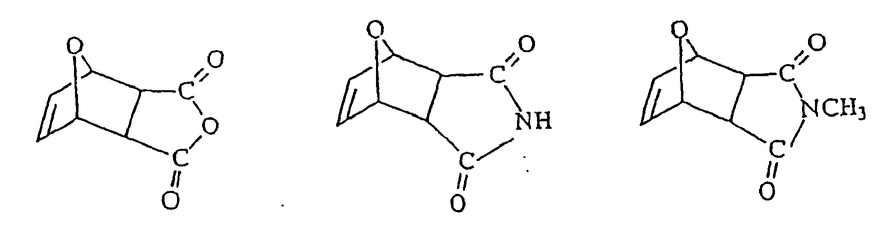

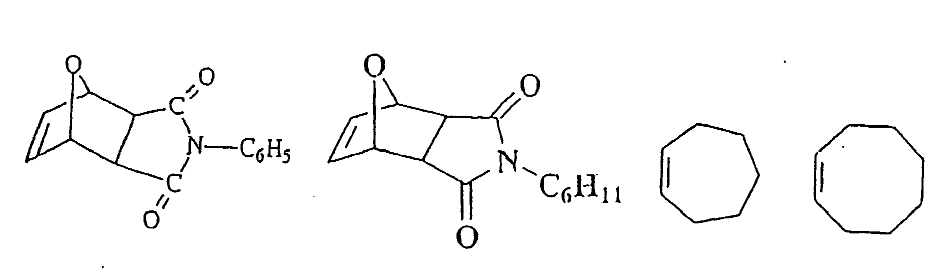

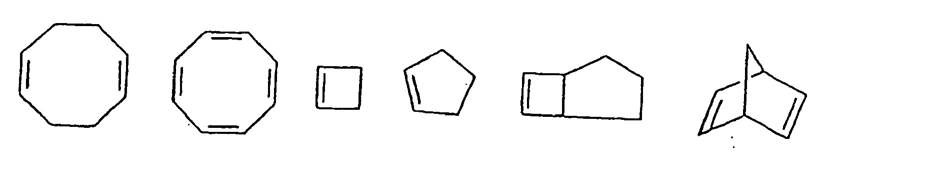

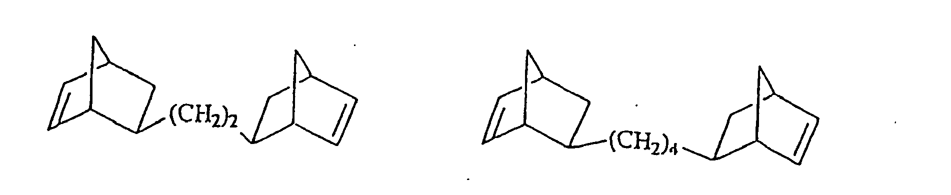

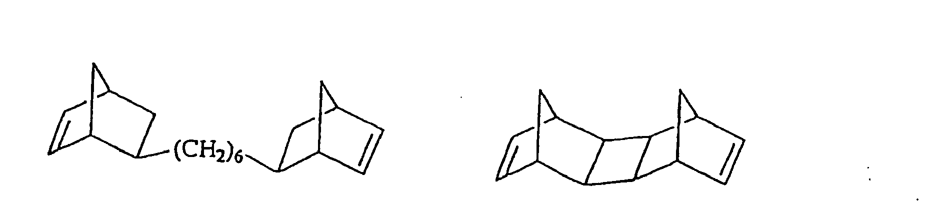

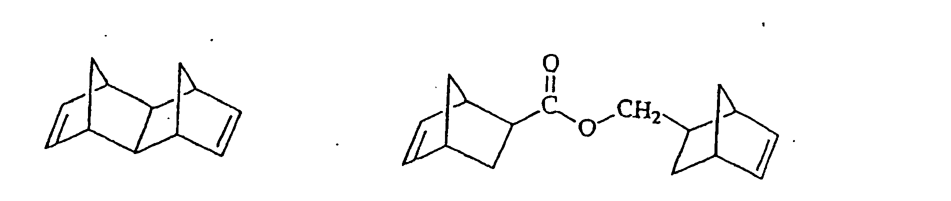

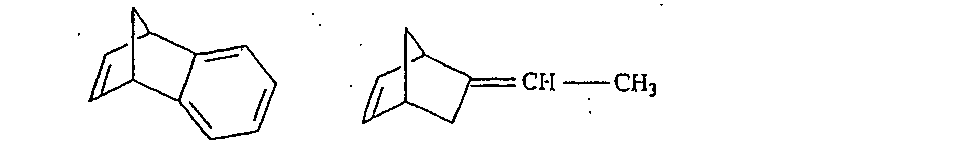

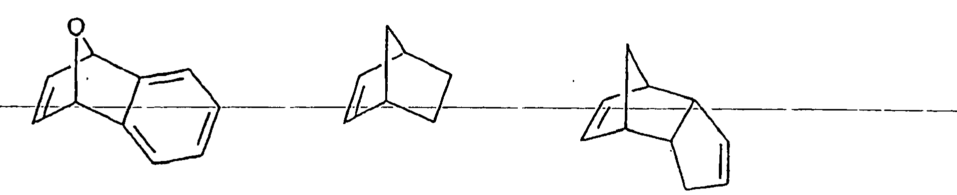

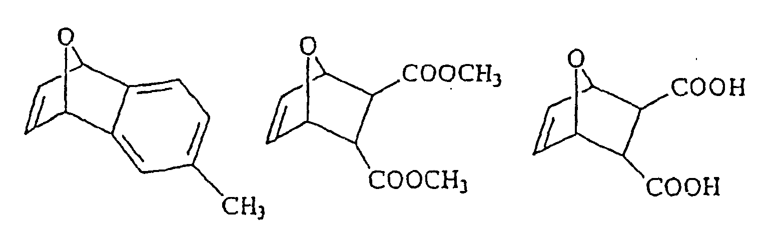

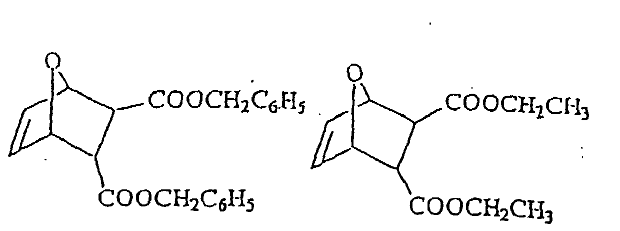

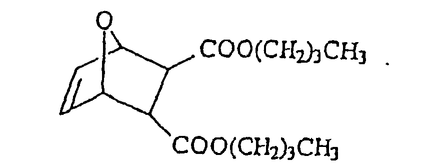

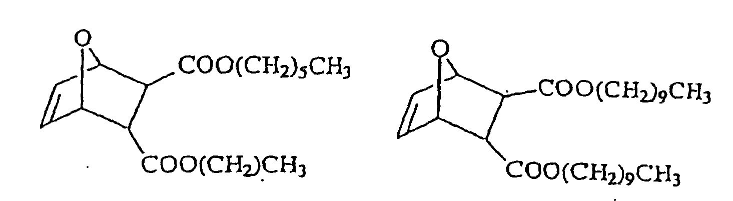

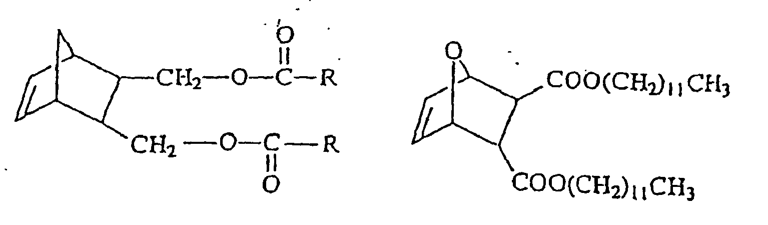

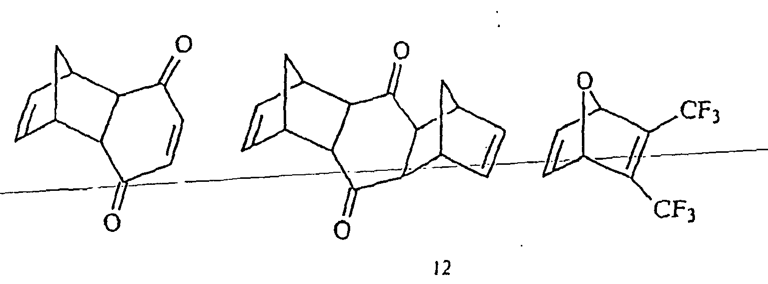

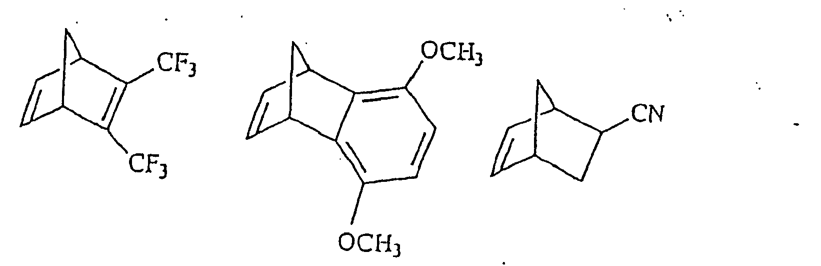

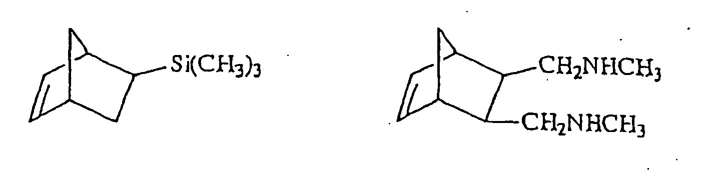

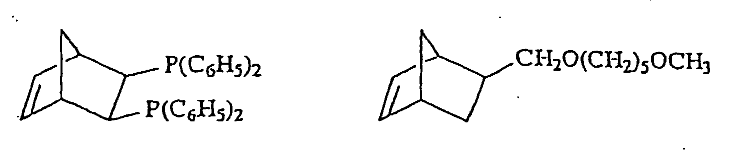

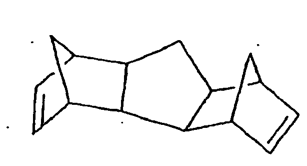

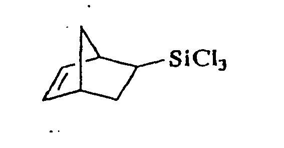

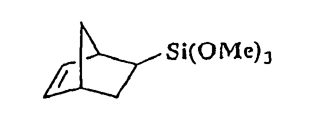

A preferred metathesizable monomer is ethylidenenorbornene, particularly 5-ethylidene-2-norbornene monomer (referred to herein as "ENB"), and dicyclopentadiene (referred to herein as "DCPD"). Ethylidenenorbornene surprisingly provides superior performance over a wide variety of substrates. Another preferred metathesizable monomer is bicyclo[2.2.1]hept-5-en-2-yl-trichlorosilane.

When used as a coating or an adhesive the metathesizable monomer or oligomer may be used by itself in a substantially pure form or technical grade. Of course, as described below the metathesizable monomer or oligomer can be included in a mixture with other components or it can be substantially diluted with a solvent or carrier fluid. As used herein, "technical grade" means a solution that includes at least about 90 weight % monomer or oligomer. The advantage of using a technical grade is that the metathesizable composition is approximately 100% reactive and thus there are no workplace or environmental problems caused by volatile organic compounds or performance problems caused by non-reactive additives and there is no need for purification.

Alternatively, the metathesizable monomer or oligomer can be included in a multi-component composition such as an emulsion, dispersion, solution or mixture. In other words, the metathesizable material can be a multi-component composition that includes at least one metathesizable component such as a metathesizable monomer or oligomer. Preferably, such metathesizable component-containing composition is in the form of a liquid, paste or meltable solid when it is applied. The metathesizable liquid composition can be prepared by mixing together the components according to conventional means and then can be stored for an extended time period prior to use (referred to herein as "shelf life").

For example, the metathesizable monomer can be dissolved or dispersed in conventional organic solvents such as cyclohexane, methylene chloride, chloroform, toluene, tetrahydrofuran, N-methylpyrrolidone, methanol, ethanol or acetone or in water. One particularly useful composition could include the metathesizable monomer/oligomer dissolved in a polymer such as a polyester, polyurethane, polycarbonate, epoxy or acrylic. The metathesizable component can also be included in a multi-component composition wherein the metathesis polymerization occurs in the presence of a pre-formed and/or simultaneously forming material resulting in the formation of an interpenetrating polymer network (IPN).

The metathesizable composition (either monomer alone or multi-component) preferably is substantially about 100% solids. In other words, the composition does not include substantially any liquid amount that does not react to form a solid.

The amount of metathesizable material applied to a substrate surface should be sufficient to form a continuous film in the case of a coating or provide adequate bonding in the case of an adhesive. The amount varies depending upon a variety of factors including substrate type, application and desired properties but it could range from 0.01 to 1,000, preferably, 0.1 to 100 and more preferably 0.3 to 25 mg/cm² substrate surface area.

Any catalyst that is capable of polymerizing the metathesizable material upon contact can be used. The catalyst should also have good stability after it is applied to the substrate surface. In particular for normal ambient conditions bonding, the catalyst should be capable of maintaining its activity in the presence of oxygen and moisture for a reasonable period of time after application to the fibrous substrate material and until the metathesizable material is brought into contact with the catalyst. Experimental tests have indicated that certain catalysts can remain active for at least 30 days after coating on the substrate surface.

There are numerous known metathesis catalysts that might be useful in the invention. Transition metal carbene catalysts are well known. Illustrative metathesis catalyst systems include rhenium compounds (such as Re₂O₇/Al₂O₃, ReCl₅/Al₂O₃, Re₂O₇/Sn(CH₃)₄, and CH₃ReO₃/Al₂O₃-SiO₂); ruthenium compounds (such as RuCl₃, RuCl₃(hydrate), K₂[RuCl₅-H₂O], [Ru(H₂O)₆](tos)₃ ("tos" signifies tosylate), ruthenium/olefin systems (meaning a solution or dispersion of preformed complex between Ru and olefin (monomer) that also includes a β-oxygen in the presence or absence of a soluble or dispersed polymer where the polymer can be an oligomer or higher molecular weight polymer prepared by metathesis or other conventional polymerization synthesis), and ruthenium carbene complexes as described in detail below); osmium compounds (such as OsCl₃, OsCl₃(hydrate) and osmium carbene complexes as described in detail below); molybdenum compounds (such as molybdenum carbene complexes (such as *t*-butoxy and hexafluoro-*t*-butoxy systems), molybdenum pentachloride, molybdenum oxytrichloride, tridodecylammonium molybdate, methyltricaprylammonium molybdate, tri(tridecyl)ammonium molybdate, and trioctylammonium molybdate); tungsten compounds (such as tungsten carbene complexes (such as t-butoxy and hexafluoro-*t*-butoxy systems), WCl₆ (typically with a co-catalyst such as SnR₄ ® signifies alkyl) or PbR₄), tungsten oxytetrachloride, tungsten oxide tridodecylammonium tungstate, methyltricaprylammonium tungstate, tri(tridecyl)ammonium tungstate, trioctylammonium tungstate, WCl₆/CH₃CH₂OH/CH₃CH₂AlCl₂, WO₃/SiO₂/Al₂O₃, WCl₆/2,6-C₆H₅-C₆H₅OH/SnR₄, WCl₆/2,6-Br-C₆H₃OH/SnR₄, WOCl₄/2,6-C₆H₅-C₆H₅OH/SnR₄, WOCl₄/2,6-Br-C₆H₃OH/SnR₄); TiCl₄/aluminum alkyl; NbOₓ/SiO₂/iso-butyl AlCl₂; and MgCl₂. As indicated above, some of these catalysts, particularly tungsten, require the presence of additional activator or initiator systems such as aluminum, zinc, lead or tin alkyl. Preferred catalysts are ruthenium compounds, molybdenum compounds and osmium compounds.

Particularly preferred are ruthenium, osmium or iridium carbene complexes having a structure represented by 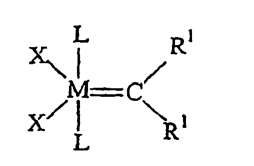 wherein M is Os, Ru or Ir; each R¹ is the same or different and is H, alkenyl, alkynyl, alkyl, aryl, alkaryl, aralkyl, carboxylate, alkoxy, allenylidenyl, indenyl, alkylalkenylcarboxy, alkenylalkoxy, alkenylaryl, alkynylalkoxy, aryloxy, alkoxycarbonyl, alkylthio, alkylsulfonyl, alkylsulfinyl, amino or arnido; X is the same or different and is either an anionic or a neutral ligand group; and L is the same or different and is a neutral electron donor group. The carbon-containing substituents may have up to about 20 carbon atoms. Preferably, X is Cl, Br, I, F, CN, SCN, or N₃, O-alkyl or O-aryl. Preferably, L is a heterocyclic ring or Q(R²)ₐ wherein Q is P, As, Sb or N; R² is H, cycloalkyl, allcyl, aryl, alkoxy, arylate, amino, alkylanuno, arylamino, amido or a heterocyclic ring; and a is 1, 2 or 3. Preferably, M is Ru; R¹ is H, phenyl ("Ph"), -CH=C(Ph)₂, -CH=C(CH₃)₂ or -C(CH₃)₂Ph; L is a trialkylphosphine such as PCy₃ (Cy is cyclohexyl or cyclopentyl), P(isopropyl)₃ or PPh₃; and X is Cl. Particularly preferred catalysts include tricyclohexyl phosphine ruthenium carbenes, especially bis(tricyclohexylphosphine)benzylidene ruthenium(IV) dichloride (designated herein by RuCl₂(PCy₃)₂=CHPh). Such ruthenium and osmium carbene catalysts are described, for example, in U.S. Patents No. 5,312,940 and 5,342,909, both incorporated herein by reference; Schwab, P.; Grubbs, R.H.; Ziller, J.W., *Journal of the American Chemical Society,* 1996, 118, 100; Schwab, P.; France, M.B., Ziller, J.W.; Grubbs, R.H., *Angew. Chem. Int. Ed*. , 1995, 34, 2039; and Nguyen, S.T.; Grubbs, R.H., *Journal of the American Chemical Society*, 1993, 115, 9858.

Additionally preferred catalysts within this group are those catalysts wherein the L groups are trialkylphosphines, imidazol-2-ylidene or dihydroimidazol-2-ylidene based systems, either mixed or the same. Examples of these catalysts include N,N'-disubstituted 4,5-dihydroimidazol-2-ylidene substituted ruthenium carbene, a N,N'-disubstituted imidazol-2-ylidene substituted ruthenium carbene, a mixed phosphine-dihydroimidazol-2-ylidene substituted ruthenium carbene or a mixed phosphine-imidazol-2-ylidene substituted ruthenium carbene. Particularly preferred among these are tricyclohexylphosphine[1,3-bis(2,4,6-trimethylphenyl)-4,5-dihydroimidazol-2-ylidene][benzylidene]ruthenium (IV) dichloride, or tricyclohexylphosphine[1,3-bis(2,3,6-trimethylphenyl)-4,5-imidazol-2-ylidene][benzylidene]ruthenium (IV) dichloride. The following are some useful catalysts (Cy = cyclohexyl, R₂ = alkyl and aryl groups):

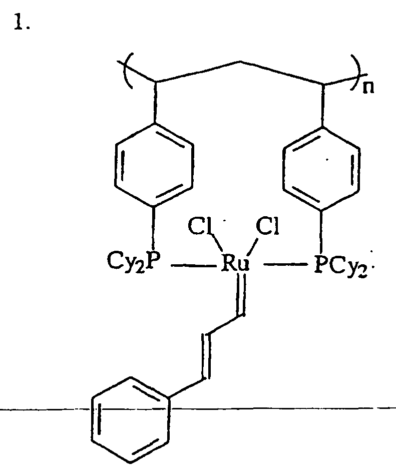

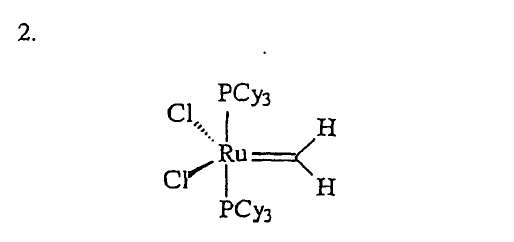

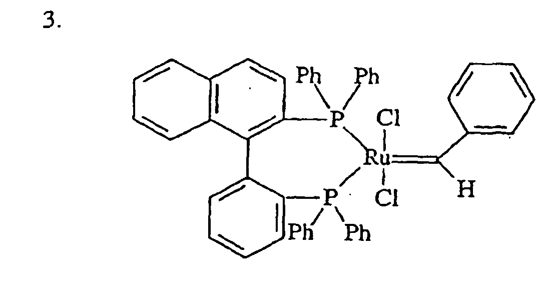

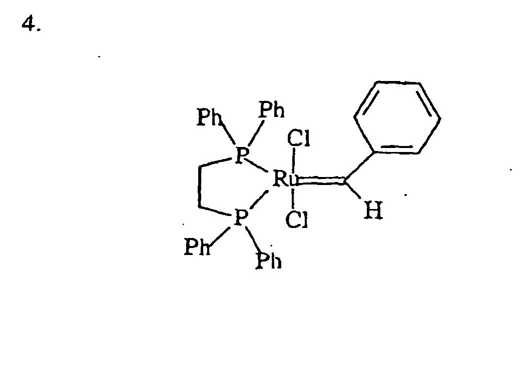

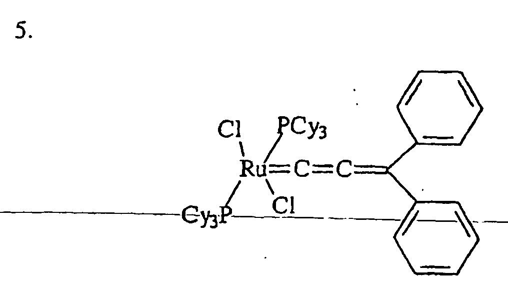

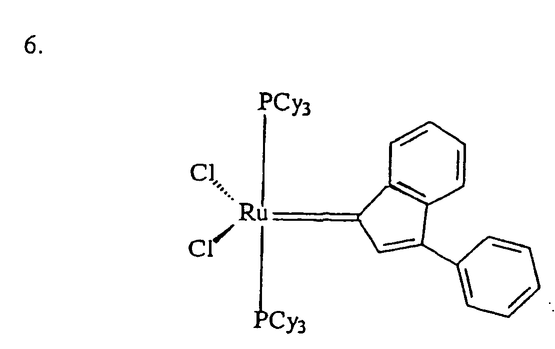

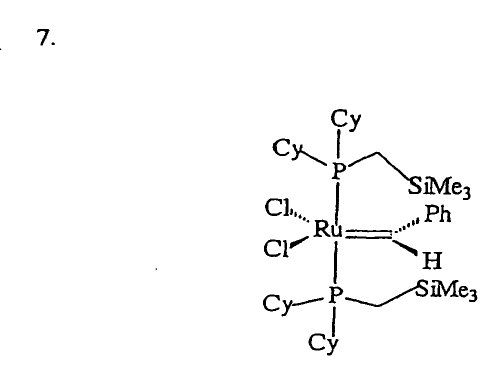

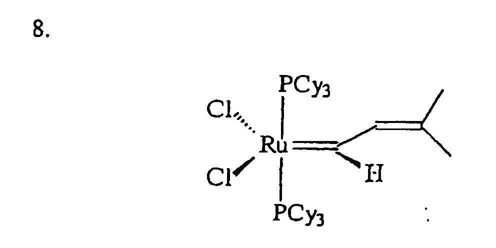

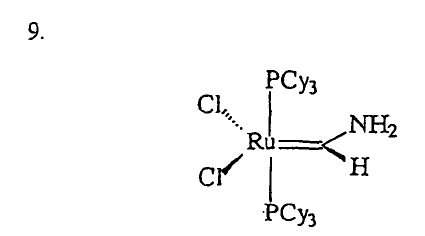

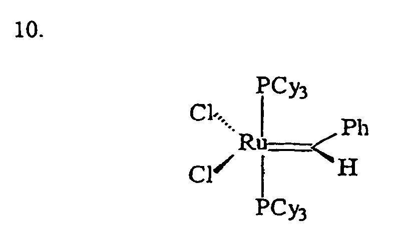

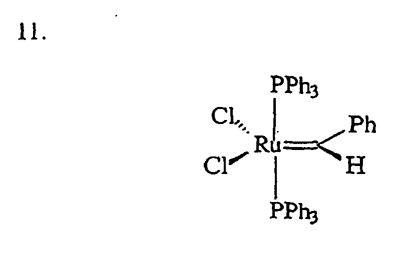

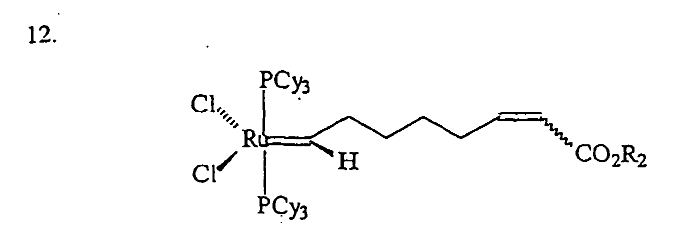

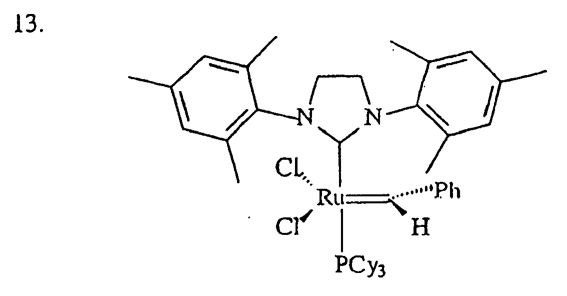

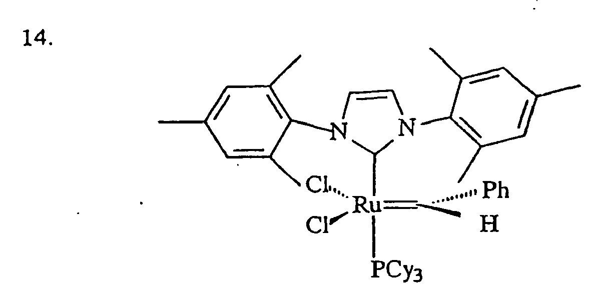

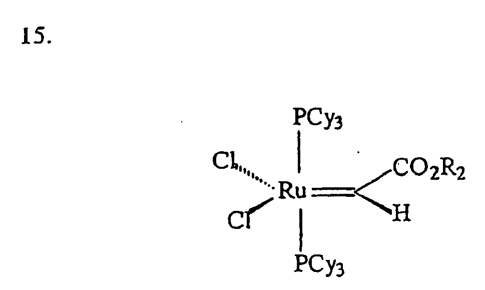

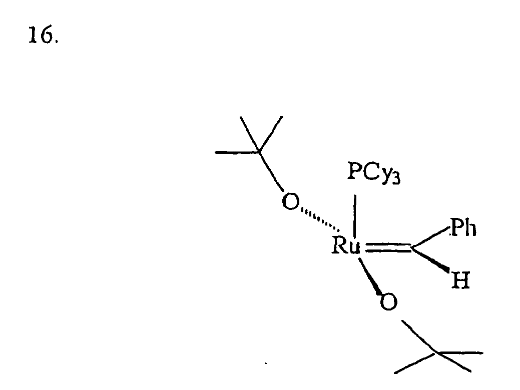

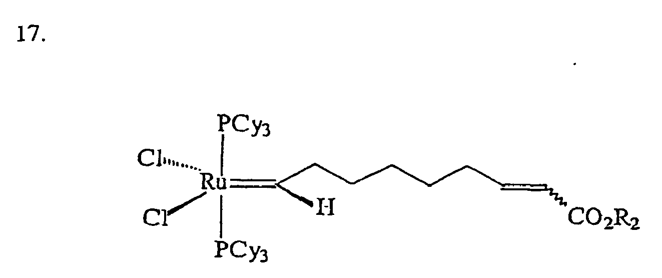

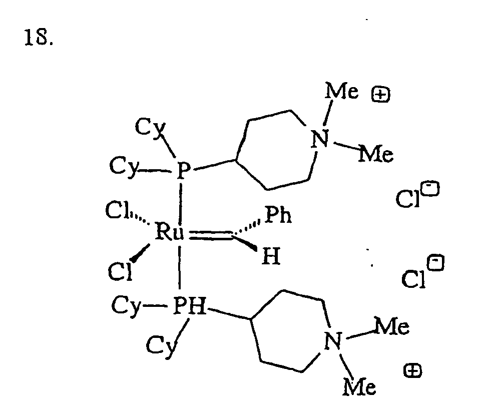

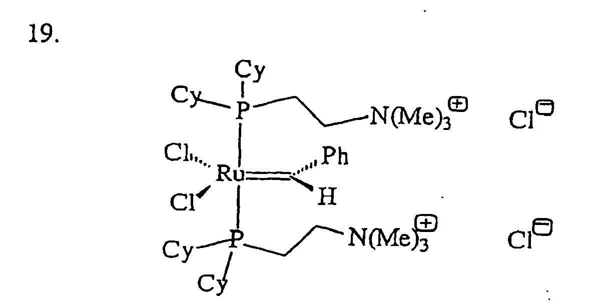

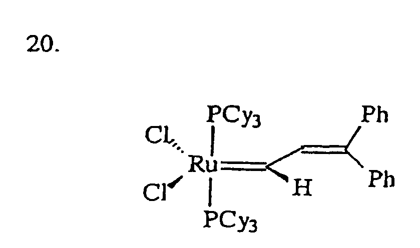

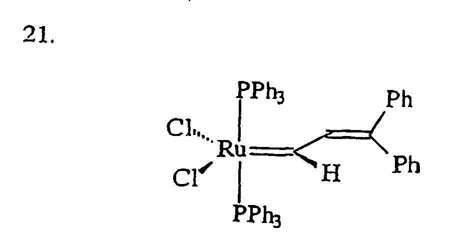

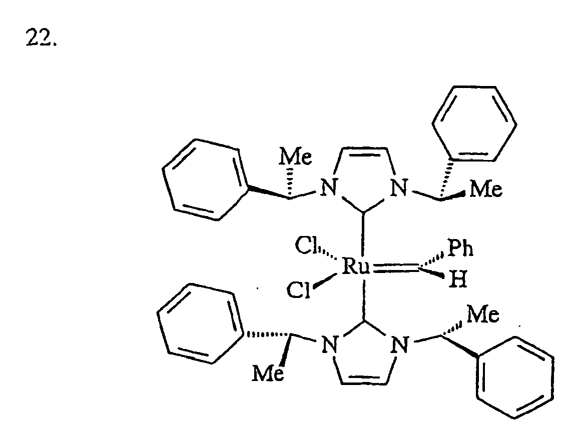

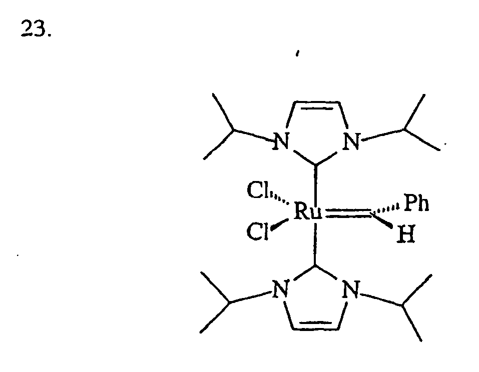

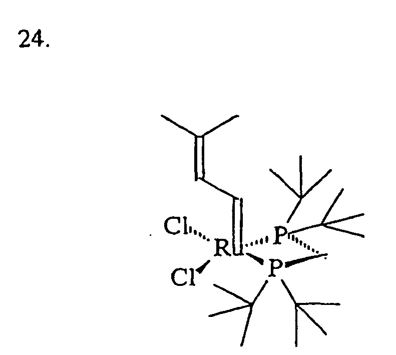

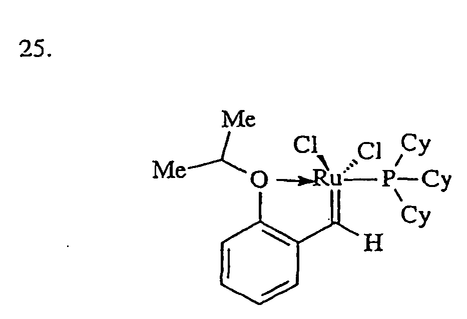

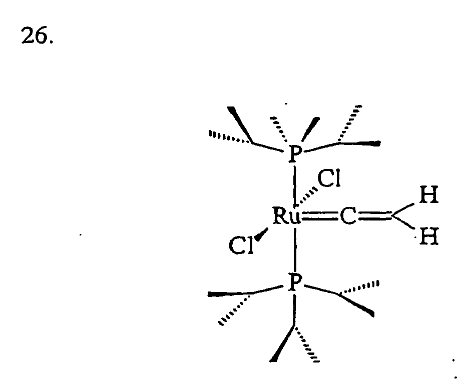

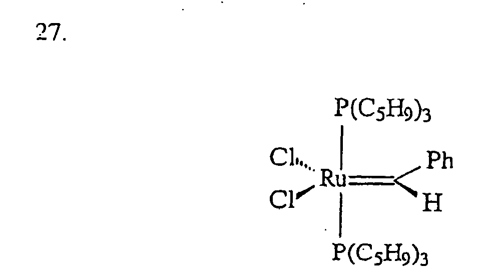

Useful catalysts are described in articles such as Ahmed, M.; Ganett, A. G. M.; Braddock, D. C.; Cramp, S. M.; Procopoiou, P. A. *Tetrahedron Letters* **1999,** *40,* 8657; Olivan, M.; Caulton, K. G. *J. Chem. Soc., Chem. Commun.* **1997,** 1733; Amoroso, D.; Fogg, D. E. *Macromolecules* **2000***, 33, 2815;* Fürstner, A.; Hill, A. F.; Liebl, M.; Wilton-Ely, J. D. E. T. *J. Chem. Soc., Chem. Commun.,* **1999**, 601; Robson, D. A.; Gibson, V. C.; Davies, R. G.; North, M. *Macromolecules* **1999**, 32, 6371; Schwab, P.; France, M. B.; Ziller, J. W.; Grubbs, R. H. *Angew. Chem. Int. Ed*. **1995,** *34*, 2039; Schwab, P.; Grubbs, R. H.; Ziller, J. W. *J. Am. Chem. Soc*. **1996,** *118*, 100; Ulman, M.; Belderrain, T. R.; Grubbs, R. H. *Tetrahedron Lett.* **2000**, 4689; M. Scholl; S. Ding; C. W. Lee; Grubbs, R. H. *Organic Lett*. **1999**, *1*, 953; Scholl, M.; Tmka, T. M.; Morgan, J.P.; Grubbs, R. H. *Tetrahedron Lett.* **1999**, *40*, 2247; Belderrain, T. R.; Grubbs, R. H. *Organometallics* **1997**, *16*, 4001; Ulman, M.; Belderrain, T.R.; Grubbs, R. H. *Tetrahedron Lett*. **2000**, 4689; Sanford, M. S.; Henling, L. M.; Day, M. W.; Grubbs, R. *H. Angew. Chem. Int. Ed*. **2000**, *39*, 3451; Lynn, D. M.; Mohr, B.; Grubbs, R. H.; Henling, L.M.; Day, M. W. *J. Am. Chem. Soc.* **2000**, *122*, 6601; Mohr, B.; Lynn, D. M.; Grubbs, R. H. *Organometallics* **1996**, *15*, 4317; Nguyen, S. T.; Grubbs, R. H.; Ziller, J. W. *J. Am. Chem*. *Soc.* **1993**, *115*, 9858; Weskamp, T.; Schattenmann, W. C.; Spiegler, M.; Hemnann, W. A. *Angew*. *Chem*. *Int. Ed.* **1998**, *37*, 2490; Hansen, S. M.; Volland, M. A. 0.; Rominger, F.; Eisentrager, F.; Hofmann, P. *Angew. Chem*. *Int. Ed.* **1999,** 38, 1273; J. S. Kingsbury, J. S.; Harrity, J. P. A.; Bonitatebus, P. J.; Hoveyda, A. H. *J. Am*. *Chem*. *Soc*. **1999**, *121*, 791; Wolf, J.; Stuer, W.; Grunwald, C.; Werner, H.; Schwab, P.; Schulz, M. *Angew. Chem*. *Int. Ed.* **1998,** 37, 1124.

Another ruthenium carbene complex that may be useful is a bimetallic catalyst having a structure represented by 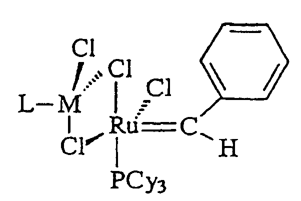 wherein M is Ru, Os or Rh. Such a catalyst is disclosed in Dias, E.L.; Grubbs, R.H., *Organometallics*, 1998, 17, 2758.

Preferred molybdenum or tungsten catalysts are those represented by the formula: 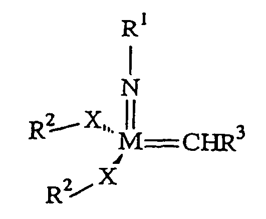 wherein M is Mo or W; X is O or S; R¹ is an alkyl, aryl, aralkyl, alkaryl, haloalkyl, haloaryl, haloaralkyl, or a silicon-containing analog thereof; R² are each individually the same or different and are an alkyl, aryl, aralkyl, alkaryl, haloalkyl, haloaryl, haloaralkyl, or together form a heterocyclic or cycloalkyl ring; and R³ is alkyl, aryl, aralkyl or alkaryl. Preferably, M is Mo; X is O; R¹ is phenyl or phenyl(R⁵) wherein R⁵ is phenyl, isopropyl or alkyl; R² is -C(CH₃)₃, -C(CH₃)(CF₃)₂,
(wherein R⁴ is phenyl, naphthyl, binaphtholate or biphenolate); and R³ is -C(CH₃)₂C₆H₅. Particularly preferred are 2,6-diisopropylphenylimidoneophylidene molybdenum (VI) bis(hexafluoro-t-butoxide) (designated herein as "MoHFTB") and 2,6-diisopropylphenylimidoneophylidene molybdenum (VI) bis(t-butoxide) (designated herein as "MoTB"). Such molybdenum catalysts are described in Bazan, G.C., Oskam, J.H., Cho, H.N., Park, L.Y., Schrock, R.R., *Journal of the American Chemical Society,* 1991, 113, 6899 and U.S. Patent No. 4,727,215.

The catalyst can be delivered at the surface of the fibrous substrate by any method. Typically the catalyst is applied in a liquid composition to the substrate surface. The catalyst in its substantially pure form may exist as a liquid or solid at normal ambient conditions. If the catalyst exists as a liquid, it may be mixed with a carrier fluid in order to dilute the concentration of the catalyst. If the catalyst exists as a solid, it may be mixed with a carrier fluid so that it can be easily delivered to the substrate surface. Of course, a solid catalyst may be applied to the surface without the use of a liquid carrier fluid. The preferred RuCl₂(PCy₃)₂=CHPh, homobimetallic ruthenium, MoHFTB and MoTB catalysts exist as solids at normal ambient conditions and thus are usually mixed with carrier fluids. The catalyst composition could also be considered a primer in the sense that it primes the substrate surface for subsequent application of a coating or an adhesive.

The present invention preferably does not require any pre-functionalization of the fibrous substrate surface prior to application of the catalyst. In other words, the substrate surface does not have to be reacted with any agent that prepares the surface for receiving the catalyst. For example, formation on the substrate surface of a so-called monolayer or self-assembling layer made from a material (such as a thiol) different than the catalyst or the metathesizable adhesive or coating is unnecessary. The catalyst can be applied to be in "direct contact" with the substrate surface. Of course, for metallic substrates the substrate surface can be pre-treated with conventional cleaning treatments or conversion treatments and for elastomer substrates the surface can be solvent-wiped.

The catalyst may be dispersed, suspended or dissolved in the carrier fluid. The carrier fluid may be water or any conventional organic solvent such as dichloroethane, toluene, methyl ethyl ketone, acetone, tetrahydrofuran, N-methyl pyrrolidone, 3-methyl-2-oxazolidinone, 1,3-dimethylethyleneurea, 1,3-dimethylpropyleneurea and supercritical carbon dioxide. Ruthenium, osmium and iridium catalysts are particularly useful in polar organic and aqueous carrier systems. The carrier fluid can be capable of evaporating from the substrate surface under normal ambient conditions or upon heating.

The amount of catalyst applied to the substrate should be sufficient to effect the metathesis polymerization. The amount varies depending upon a variety of factors including the application, substrate type and desired properties but it could range from 0.001 to 10, preferably, 0.01 to 5 and more preferably 0.1 to 5 mg/cm² substrate surface area.

The adhesive or coating of the invention offers numerous ease-of-use advantages. The metathesis polymerization occurs under normal ambient conditions in air regardless of whether moisture is present. There is no need for an exterior energy source such as radiation, thermal or photochemical for curing to produce the adhesive or coating. Thus, the adhesive or coating will adhere to thermally or solvent sensitive surfaces. In addition, there are a minimal number of steps according to the invention. There is no need to initially react the substrate surface to form any particular type of functional groups on the surface. There is no need for multiple, carefully controlled steps required for forming so-called monolayers or self-assembling layers. The bond formed by the method of the invention displays remarkable adhesive strength considering the ease-of-use of the method.

A further significant advantage is that the method of the invention is environmentally-friendly. The catalyst can be delivered to the substrate surface with an aqueous carrier fluid. Substantially pure or technical grade metathesizable monomer/oligomer can be used and the monomer/oligomer is substantially 100% reactive. Consequently, there are substantially no volatile organic solvents used according to one embodiment of the invention.

Although not bound by any theory, it is believed that the adhesive or coating formed according to the invention achieves its remarkable bonding due to a number of factors. The monomer and/or catalyst diffuses readily into the substrate surface, particularly elastomeric substrates. As a result of this diffusion, an interpenetrating network develops between the polymer chains formed from the metathesizable material and molecular structure of the substrate material. Moreover, the metathesis polymerization reaction may well also encourage the formation of strong covalent bonds formed between molecules of the metathesizable material and molecules of the substrate. A unique advantage of the coating is its excellent adherence to the substrate surface.

The adhesive or coating is an addition polymer formed via the metathesis reaction. The resulting polymer should be capable of forming a continuous film. Olefin metathesis typically yields polymers having an unsaturated linear backbone. The degree of unsaturation functionality of the repeat backbone unit of the polymer is the same as that of the monomer. With a norbornene reactant, the resulting polymer should have a structure represented by: 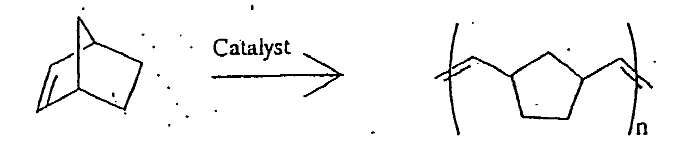 wherein n can be 1 to 1,000,000, preferably 1 to 1,000, more preferably 1 to 500. The molar ratio of norbornene reactant to catalyst may range, depending on the application, from 1,000,000: 1 to 1:1, preferably 1,000:1 to 1:1.

The resulting polymer film can be brittle, but surprisingly superior bonding occurs even with flexible substrates. It appears that any cracking of the film does not propagate into the substrate.

According to a preferred embodiment of the invention the liquid catalyst (either by itself or as a component of a multi-component catalyst composition) is applied to the fibrous substrate surface. The catalyst can be applied to achieve continuous surface coverage or coverage only in predetermined selected areas by any conventional coating/printing means such as spraying, dipping, brushing, wiping, roll-coating or the like. The metathesizable material can be contacted with the resulting catalyzed-coated surface when it is still wet. However, the catalyst carrier fluid preferably is allowed to evaporate and then the metathesizable material is applied to the dry catalyzed-coated surface. Evaporation of the catalyst carrier fluid can occur over time in normal ambient conditions or it can be accelerated by subjecting the catalyst-coated surface to heat or vacuum. A noteworthy advantage of the invention is that the dry catalyst-coated surface remains stable and active for an extended period of time. Although not wishing to be bound by specific limits, it is believed that the dry catalyst-coated surface should retain its activity for at least five minutes, preferably at least 24 hours, more preferably for at least 1 month, and most preferably for at least 6 months. This stability contributes to manufacturing flexibility by providing a relatively long time period during which the metathesizable material may be contacted with the catalyzed surface. For example, a series of substrates can be coated with the catalyst and then stored until needed for coating or bonding.

Once the catalyst has been made available at the substrate surface, the metathesizable material (whether in the form of a second substrate, coating or adhesive) is brought into contact with the catalyst on the substrate surface. The metathesizable material typically begins to react upon contact with the catalyst. Film formation is caused by the metathesis polymerization of the metathesizable material to form a substantially linear polymer. The film-forming rate could be accelerated by addition of either Bronsted acids, Lewis acids or CuCl to either the catalyst composition or the metathesizable composition. Methods for contacting the metathesizable material to the catalyst-coated substrate surface depend upon the intended application.

If the metathesizable material is itself intended to form a coating, then it can be applied in a liquid form under normal ambient conditions to the catalyst-coated substrate surface by any conventional coating/printing means such as spraying, dipping, brushing, wiping, roll-coating or the like. The metathesizable coating material also could be applied by extrusion if it is in the form of a molten material. The coating thickness can be varied according to intended use.

The metathesizable material, especially in the form of a monomer, can be included as a component in a multi-component exterior coating formulation such as a paint or caulk. In such a system the catalyst could be included in a primer formulation that is applied prior to the exterior coating.

Illustrative fiber substrates include fiberglass, polyester, polyamide (both nylon and aramid), polyethylene, polypropylene, carbon, rayon and cotton, among others.

Illustrative fiber-reinforced or -impregnated composite substrates include fiberglass-reinforced prepreg ("FRP"), sheet molding compound ("SMC") and fiber-reinforced elastomer composites. In the case of fiber-reinforced elastomer composites, fiber substrates can be sandwiched between and bonded to outer elastomer layers to form a composite multilayer composite structure such as tires, belts for the automotive industry, hoses, air springs and the like. The metathesizable adhesive of the invention can be used to bond fiber reinforcing cord to tire materials. For,example, the invention may be used to bond polymer or steel tire cord-to-rubber for vehicle tire, belt and hose applications, bond fiberglass reinforcement materials or carbon fibers or polyethylene fibers within composite materials and bond fiber containing composite materials in general. Also, it is believed that use of the invention for direct fiber-to-fiber bonding generally gives improved mechanical and water barrier properties in woven and non-woven fabrics.

Fiber coating processes according to the present invention may reduce the number of processing steps and reduce the amount of waste generated in a coating process. For example, by adding a catalyst capable of polymerizing a metathesizable or metathesizable-containing material to a finishing bath in a fiber process and then passing that fiber through a bath that contains a metathesizable containing material, a contact metathesis polymer can be formed on the surface of the fiber. Alternatively, the metathesis catalyst could be incorporated at low levels directly into the fiber itself during the melt-spinning or wet-spinning process. Moreover, optical properties of fibers coated by the process of the invention could be controlled by using monomers that give polymers that possess different refractive indices.

Preferably, when the fibrous materials are to be bonded to other substrates, a catalyst is provided at or on a fibrous substrate surface and the catalyst on the fibrous substrate surface is contacted with a metathesizable material so that the metathesizable material undergoes a metathesis reaction. The fibrous substrate is then contacted with a second substrate surface and the fibrous substrate is bonded to the second substrate surface. The fibrous substrate may be any fibrous materials as defined above, and preferably will be polyester, nylon or polyamide. The second substrate may be any material desired to be bonded to the fibrous substrate, such as an elastomeric substrate. The rubber preferably may be natural rubber or EPDM.

The adhesive method of the invention as applied to bonding fibrous substrates may include soaking the fibrous substrate in a catalyst solution and dipping the catalyst-soaked fibrous substrate into a metathesizable material and allowing polymerization to occur. The second substrate surface may include more than one layer of material such that the fibrous substrate may be placed between multiple layers of the second substrate material, in the manner of a fibrous "sandwich". For example, a manufactured article may be provided comprising a fibrous substrate placed or sandwiched between and bonded to a second substrate and a third substrate wherein there is an adhesive layer interposed between the fibrous substrate and the second and third substrates, and wherein the second and third substrates comprise a rubber material and the adhesive layer comprises a metathesis polymer. When the fibrous substrate is placed between two layers of substrate material such as rubber, the composite material is then placed in a mold and cured with heat and pressure. The temperature and pressure will depend on the particular rubber utilized. Alternatively, the second substrate surface may be provided by spraying the metathesizable material or by flowing rubber through a fiber matrix under pressure.

The adhesive method of the invention, in one embodiment, is used to bond fiber to rubber to form a fiber tire cord. This method may comprise applying a catalyst on the fibers, contacting the catalyst on the fibers with a metathesizable material so that the metathesizable material undergoes a metathesis reaction, and contacting the fibers with the rubber. The fibers and rubber composite material may then be cured.

The adhesive method of the invention also provides a method for coating a fibrous substrate involving providing a catalyst at the fibrous substrate and contacting the catalyst on the fibrous substrate with a material that undergoes a metathesis reaction to form a coating on the fibrous substrate.

The adhesive embodiment of the invention can also be used to make fiber-reinforced or -impregnated composites themselves. For example, the catalyst can be applied to the fiber or cord and then either a separate metathesizable material is contacted with the catalyst-treated fiber or cord so as to form an adhesive with the composite matrix material or the composite matrix material is itself metathesizable.

The bonding process of the invention is particularly useful for bonding a substrate made from a thermoplastic elastomer such as SANTOPRENE® to another thermoplastic elastomer substrate : SANTOPRENE® is the trade designation of a thermoplastic elastomer ("TPE") commercially available from Advanced Elastomer Systems that consists of elastomer particles dispersed throughout a continuous matrix of thermoplastic material. Such TPE blends are described in detail in U.S.-A-5,609,962. As used herein, TPE also includes thermoplastic olefins ("TPO") such as those described in U.S.-A-5,073,597.

Polyolefins are typically the thermoplastic material used as the continuous matrix of TPE. According to the '962 patent, they are desirably prepared from monoolefin monomers having 2 to 7 carbon atoms, such as ethylene, propylene, 1-butene, isobutylene, 1-pentene, 1-hexene, 1-octene, 3-methyl-1-pentene, 4-methyl-1-pentene, 5-methyl-1-hexene, mixtures thereof and copolymers thereof with (meth)acrylates and/or vinyl acetates. Preferred are monomers having 3 to 6 carbon atoms, with propylene being preferred. The polypropylene can be highly crystalline isotactic or syndiotactic polypropylene.

A portion of the polyolefin component can be a functionalized polyolefin according to the '962 patent. In other words, non-functionalized polyolefins and functionalized polyolefins can be blended or mixed together to form the TPE. The polyolefins of the functionalized polyolefins can be homopolymers of alpha-olefins such as ethylene, propylene, 1-butene, 1-hexene and 4-methyl-1-pentene and copolymers of ethylene with one or more alpha-olefins. Preferable among the polyolefins are low-density polyethylene, linear low-density polyethylene, medium- and high-density polyethylene, polypropylene, and propylene-ethylene random or block copolymers. The functionalized polyolefins contain one or more functional groups, which have been incorporated during polymerization. However, they are preferably polymers onto which the functional groups have been grafted. Such functional group-forming monomers are preferably carboxylic acids, dicarboxylic acids or their derivatives such as their anhydrides.

The elastomer component of TPE is made from olefinic rubbers such as EPM, EPDM, butyl rubber, copolymer of a C₄₋₇ isomonoolefin and a para-alkylstyrene, natural rubber, synthetic polyisoprene, polybutadiene, styrene-butadiene copolymer rubber, nitrile rubber, polychloroprene and mixtures thereof.

According to the '962 patent, the amount of polyolefin is generally from 10 to 87 weight percent, the amount of rubber is generally from 10 to 70 weight percent, and the amount of the functionalized polyolefin is 3 to 80 weight percent, provided that the total amount of polyolefin, rubber and functionalized polyolefin is at least about 35 weight percent, based on the total weight of the polyolefin, rubber, functionalized polyolefin and optional additives.

The olefin rubber component is generally present as small, e.g., micro-size, particles within a continuous polyolefin matrix. The rubber is partially crosslinked (cured) and preferably fully crosslinked or cured. The partial or full crosslinking can be achieved by adding an appropriate rubber curative to the blend of polyolefin and rubber and vulcanizing the rubber to the desired degree under conventional vulcanizing conditions. It is preferred that the rubber be crosslinked by the process of dynamic vulcanization wherein the rubber is vulcanized under conditions of high shear at a temperature above the melting point of the polyolefin component. The rubber is thus simultaneously crosslinked and dispersed as fine particles within the polyolefin matrix. other additives. Retread or tread stock can be in the form of a strip that is placed around the outer periphery of the concentric circular tire carcass or casing. The cured carcass is similarly well known in the art and is made from conjugated dienes such as polyisoprene or natural rubber, rubbers made from conjugated diene monomers having from 4 to 10 carbon atoms with vinyl substituted aromatic monomers having from 8 to 12 carbon atoms, and blends thereof. Such rubbers generally contain various antioxidants, fillers such as carbon black, oils, sulfur, accelerators, stearic acid, and antiozonants and other additives.

The bonding method of the invention also is particularly useful in bonding fiber for tire cord applications. For example, fibers were coated by dipping the fiber into a metathesis catalyst containing mixture or solution, allowing the fibers to dry and then dipping the catalyst-coated fiber into neat monomer, which is a metathesizable material, or a mixture containing a metathesizable material. A polymer coating formed on the fiber surface when the catalyst coated fiber came into contact with the monomer. The polymer coated fibers may then be encapsulated into a rubber matrix for use as a tire cord, belt or hose. Fibers prepared as such can be evaluated for fiber adhesion using the H-test for tire cord adhesion to rubber according to ASTM D 4776-96.

The invention will be described in more detail by way of the following non-limiting examples. Unless otherwise indicated, the steel coupons used in the examples are made from grit-blasted, 1010 fully hardened, cold rolled steel, the cured EPDM rubber strips are available from British Tire and Rubber under the designation 96616 and all bonding and coating was performed at normal ambient conditions.

Primary adhesion of the bonded samples was tested according to ASTM-D 429 Method B. The bonded samples are placed in an Instron and the elastomeric substrate is peeled away from the other substrate at an angle of 180° at 50.88mm (2 inches) per minute. The mean load at maximum load and the mean energy-to-break point are measured. After being pulled apart, the samples are inspected to determine the failure mode. The most desirable failure mode is rubber tear - a portion of the elastomeric material of one substrate remains on the other substrate. Rubber tear indicates that the adhesive is stronger than the elastomeric material.

### Example 1 - Fiber Coating by Application of RuCl₂(PCy₃)₂=CHPh and Monomer (Reference Example)

Kevlar®, Nomex®, and nylon threads (size 69, 0.2032 mm) were cut into 30.48 cm lengths, soaked in a solution containing approximately 0.04 g of RuCl₂(PCy₃)₂=CHPh in 5 ml of CH₂Cl₂ for one minute, and allowed to dry in a straight position. After 20 minutes the threads were sprayed with 8 ml of ENB. After two hours the threads appeared straight and stiff. Tensile properties for these specimens were compared to uncoated threads on an Instron (Table 1). No real differences in tensile data were observed. However, each thread was thicker providing evidence that the threads were indeed coated.

**Table 1. Tensile Properties of ENB Coated and Uncoated Threads.**

| Thread | Load @ Max Load (Kg) | Max. % Strain | Thickness (mm)^{a} |
|---|---|---|---|
| Kevlar | 3.947±1.089 | 9.310±2.354 | 0.27 |
| Kevlar - coated | 4.330±0.008 | 10.659±1.056 | 0.31 |
| Nylon | 2.633±0.477 | 59.069±17.614 | 0.26 |
| Nylon - coated | 2.601±0.651 | 31.154±8.324 | 0.30 |
| Nomex | 1.893±0.129 | 31.289±3.006 | 0.27 |
| Nomex - coated | 2.018±0.260 | 30.452±6.182 | 0.28 |

| | | | |
|---|---|---|---|
| n) These measurements were made with calipers and then verified with a thickness gauge. | | | |

### Example 2 - Fabric Coating by Application of RuCl₂(PCy₃)₂=CHPh and Monomer (Reference Example)

Strips of cotton, fiberglass, polyester, and aramid fabric were cut to 2.54 cm x 15.24 cm geometries, dipped in a solution containing 1.0 g of RuCl₂(PCy₃)₂=CHPh in 100 ml of CH₂Cl₂ for one minute, and allowed to dry. It was noted that excess catalyst wicked to the fabric surfaces during the drying process. The excess catalyst was shaken from each fabric. All fabrics had a purple color showing that catalyst had adsorbed onto the surface. Approximately 30 ml of ENB was sprayed onto both sides of the fabric strips. All fabric samples stiffened as the polymerization occurred. Tensile properties were determined for six of each coated and uncoated specimen on an Instron (Table 2). While stiff, the fabrics could easily be bent like uncoated fabric.

By coating poly(ENB) on the polyester fabric the load at peak almost doubled, but differences in displacement or % strain were slight. This suggests that the strength of the tightly woven polyester fabric is increased strictly by addition of poly(ENB). Aramid and cotton fabrics showed displacement and % strain at peak to be halved and load at peak to be slightly increased or no change, respectively. Thus, these fabrics lose some of their stretchability by the addition of poly(ENB), but lose none of their strength. For fiberglass, the load at peak and energy to break increase significantly, while displacement and % strain at peak show no change.

**Table 2. Tensile Properties of ENB Coated and Uncoated Fabrics^{a}.**

| ID | Material Type | Displacement at Peak (mm) [mean/sd] | | % Strain at Peak (%) [mean/sd] | | Load at Peak (kN) [mean/sd] | | Energy to Break (J) [mean/sd] | |
|---|---|---|---|---|---|---|---|---|---|
| Control | Polyester | 10.882 | 0.481 | 42.841 | 1.892 | 0.889 | 0.045 | 7.036 | 0.577 |
| 8165-27 A | Polyester | 11.575 | 0.181 | 45.571 | 0.712 | 1.511 | 0.076 | 7.723 | 0.866 |
| Control | Aramid | 15.500 | 0.746 | 61.417 | 2.937 | 0.168 | 0.008 | 1.397 | 0.072 |
| 8165-27 B | Aramid | 8.282 | 1.616 | 32.605 | 6.364 | 0.237 | 0.019 | 1.758 | 0.289 |
| Control | Cotton | 6.972 | 0.404 | 27.448 | 1.590 | 0.702 | 0.022 | 2.102 | 0.218 |
| 8165-27 C | Cotton | 3.380 | 0.470 | 13.307 | 1.850 | 0.805 | 0.106 | 1.951 | 0.227 |
| Control | Fiberglass | 2.925 | 0.034 | 11.516 | 1.197 | 0.641 | 0.085 | 1.841 | 0.858 |
| 8165-27 D | Fiberglass | 3.050 | 0.166 | 12.008 | 0.653 | 1.917 | 0.203 | 8.669 | 3.042 |

| | | | | | | | | | |
|---|---|---|---|---|---|---|---|---|---|
| a) Determined using six 2.54cm x 15.24cm (1" x 6") strips of each fabric. | | | | | | | | | |

### Example 3 - Fiber Cord Coating by Application of RuCl₂(PCy₃)₂=CHPh Catalyst and Monomer and Bonding to Rubber

Five 38.1 cm (15-inch) pieces of polyester Nubond size 346 cord were waslied in hexanes for 1 hour and dried at 40° C in vacuum oven for one hour. The cords were weighed and their thicknesses measured with a digital micrometer. A catalyst solution was made by dissolving 0.2 g. of RuCl₂(PCy₃)₂=CHPh catalyst in 20 ml of CH₂Cl₂ and placed in a recrystallizing dish. The cords were soaked for five minutes in the catalyst solution and then hung to dry for an hour. The cords were weighed to determine catalyst level and then were dipped in 5-ethylidene-2-norbornene, dicyclopentadiene or bicyclo[2.2.1]hept-5-en-2-yl-trichlorosilane monomers for 10 seconds and hung to allow polymerization. The coated cords were allowed to sit overnight. This process was repeated with Kevlar and nylon samples, except that the bicyclo[2.2.1]hept-5-en-2-yl-trichlorosilane monomer was not used again.

The polymer coated cords were weighed and their thickness measured. The cord samples were sandwiched between two layers of A225P natural rubber stock, placed in heated mold, and cured at 162.8°C (325° F) for 8 minutes at 36288kg (40 tons) pressure. The cord sandwiches were then cut to create an H-test specimen consisting of a single cord with each end embedded in the center of a tab end of the rubber test block. Excess rubber flashing was removed. Adhesion of the cord to rubber was determined using ASTM method D4776-96 entitled "Standard Test Method for Adhesion of Tire Cords and Other Reinforcing Cords to Rubber Compounds by H-Test Procedure."

The bonded cord samples were then placed in the grips of a tensile tester (Instron) and then tested. The maximum force obtained was the H-test adhesion force. Control samples of unprocessed polyester, washed/dried polyester and catalyst coated polyester were also measured for adhesion to rubber using ASTM method D4776-96. The Kevlar and nylon yarns were also tested. The results are shown in Table 3 below. These results were compared with data obtained with yarn that had been coated by dipping a solution containing poly(ENB) that had been prepared by solution ROMP rather than by CMP. In addition, polyester, Kevlar and nylon fiber cords were bonded to the A225P using two different traditional Chemlok® adhesives produced by Lord Corporation.

**Table 3. Fiber Adhesion Data for Different Yarns in Natural Rubber A225P.**

| Yarn | Load @ Max Load (kgf)* | Displacement @ Max Load (mm) | Energy to Break Point (kgf-mm) |
|---|---|---|---|
| Polyester | | | |
| Unprocessed | 1.238 | 1.759 | 2.325 |
| Washed/dried | 1.467 | 1.765 | 4.565 |
| Ru catalyst | 1.817 | 2.029 | 4.715 |
| Poly(ENB) - soln | 1.728 | 2.13 | 2.987 |
| Poly(ENB) - CMP | 5.932 | 4.208 | 26.081 |
| Poly(DCPD) - CMP | 3.384 | 2.764 | 10.906 |
| Poly(Cl₃SiNorb) | 3.778 | 3.412 | 11.947 |
| Lord Adhesive 1 | 4.742 | 3.451 | 10.15 |
| Lord Adhesive 2 | 7.338 | 5.533 | 28.111 |
| Kevlar | | | |
| Unprocessed | 1.314 | 2.307 | 2.992 |
| Washed/dried | 1.686 | 2.492 | 4.235 |
| Ru catalyst | 1.52 | 2.338 | 3.504 |
| Poly(ENB) - soln | 3.078 | 4.085 | 8.118 |
| Poly(ENB) - CMP | 3.641 | 4.087 | 10.874 |
| Poly(DCPD) - CMP | 2.104 | 2.604 | 4.3639 |
| Lord Adhesive 1 | 5.026 | 4.304 | 16.292 |
| Lord Adhesive 2 | 5.600 | 5.509 | 19.913 |
| Nylon | | | |
| Unprocessed | 1.19 | 2.176 | 3.251 |
| Washed/dried | 1.576 | 2.457 | 4.837 |
| Ru catalyst | 1.518 | 2.646 | 4.654 |
| Poly(ENB) - soln | 4.327 | 4.508 | 12.985 |
| Poly(ENB) - CMP | 4.873 | 4.549 | 17.252 |
| Poly(DCPD) - CMP | 3.183 | 3.203 | 7.971 |
| Lord Adhesive 1 | 6.135 | 11.754 | 26.715 |
| Lord Adhesive 2 | 6.726 | 5.755 | 28.282 |

| | | | |
|---|---|---|---|
| *1 kgf ≙ 9.806N | | | |

The data reveal increased adhesion for all processing steps, especially for CMP related processing. Improvements in displacement for the CMP samples were also observed. Significant changes in energy to break point were observed as well as large increases for load at maximum load.

## Claims

1. A method for bonding a fibrous substrate between a second and a third elastomer substrate comprising:
(a) providing a catalyst at the fibrous substrate surface;
(b) contacting the catalyst on the fibrous substrate surface with a metathesizable material so that the metathesizable material undergoes a metathesis reaction forming a polymer coated fibrous substrate;
(c) sandwiching the polymer coated fibrous substrate between the second and third substrate surface;
(d) placing the composite material obtained by step (c) in a mold ; and
(e) curing the composite material under heat and pressure.

2. A method according to claim 1 wherein the fibrous substrate comprises fiberglass, carbon, polyethylene, polyester, nylon or polyamide.

3. A method according to claim 1 wherein the elastomer is flown through a fiber matrix.

4. A method according to claim 3 wherein the elastomeric substrate is selected from the group consisting of natural rubber, polychloroprene, polybutadiene, polyisoprene, styrene-butadiene copolymer rubber, aciylonitrile-butadiene copolymer rubber, ethylene-propylene copolymer rubber, ethylene-propylene-diene terpolymer rubber, butyl rubber, brominated butyl rubber, alkylated chlorosulfonated polyethylene rubber, hydrogenated nitrile rubber, poly(n-butyl acrylate), thermoplastic elastomer and mixtures thereof.

5. A method according to claim 3 wherein the elastomeric substrate is natural rubber or ethylene-propylene-diene terpolymer rubber.

6. A method according to claim 1 wherein step (a) comprises soaking the fibrous substrate in a catalyst solution and step (b) comprises dipping the catalyst-soaked fibrous substrate into a metathesizable material and allowing polymerization.

7. A method according to claim 1 wherein step (c) comprises placing the fibrous substrate between two layers of second substrate surface in a mold and curing the second substrate surface with heat and pressure.

8. A method according to claim 1 wherein the catalyst is dissolved or mixed into a liquid carrier fluid.

9. A method according to claim 1 wherein the catalyst is included as a component of the first fibrous substrate.

10. A method according to claim 1 wherein the catalyst is selected from at least one of a rhenium compound, ruthenium compound, osmium compound, molybdenum compound, tungsten compound, titanium compound, niobium compound, iridium compound and MgCl₂.

11. A method according to claim 10 wherein the catalyst has a structure represented by 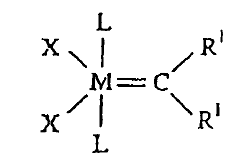 wherein M is Os, Ru or Ir; each R¹ is the same or different and is H, alkenyl, alkynyl, alkyl, aryl, alkaryl, aralkyl, carboxylate, alkoxy, allenylidenyl, indenyl, alkylalkenylcarboxy, alkenylalkoxy, alkenylaryl, alkynylalkoxy, aryloxy, alkoxycarbonyl, alkylthio, alkylsulfonyl, alkylsulfinyl, amino or amido; X is the same or different and is either an anionic or a neutral ligand group; and L is the same or different and is a neutral electron donor group.

12. A method according to claim 11 wherein X is Cl, Br, I, F, CN, SCN, N₃, O-alkyl or O-aryl; L is a heterocyclic ring or Q(R²)ₐ wherein Q is P, As, Sb or N; R² is H, cycloalkyl, alkyl, aryl, alkoxy, arylate, amino, alkylamino, arylamino, amido or a heterocyclic ring; and a is 1, 2 or 3; M is Ru; and R¹ is H, phenyl, -CH=C(phenyl)₂, -CH=C(CH₃)₂ or -C(CH₃)₂(phenyl).

13. A method according to claim 10 wherein the catalyst is a phosphine-substituted, an imidazolylidene-substituted, or a dihydroimidazolylidene-substituted ruthenium carbene.

14. A method according to claim 13 wherein the catalyst is bis(tricyclohexylphosphine)benzylidene ruthenium (IV) dichloride, tricyclohexylphosphine[1,3-bis(2,4,6-trimethylphenyl)-4,5-dihydroimidazol-2-ylidene][benzylidene]ruthenium (IV) dichloride, or tricyclohexylphosphine[1,3-bis(2,3,6-trimethylphenyl)-4,5-imidazol-2-ylidene][benzylidene]ruthenium (IV) dichloride.

15. A method according to claim 1 wherein the catalyst is stable in the presence of moisture and oxygen and can initiate polymerization of the metathesizable material upon contact at room temperature.

16. A method according to claim 1 wherein the metathesizable material is selected from ethene, α-alkene, acyclic alkene, acyclic diene, acetylene, cyclic alkene, cyclic polyene and mixtures thereof.

17. A method according to claim 16 wherein the metathesizable material comprises a cycloolefin.

18. A method according to claim 17 wherein the metathesizable material is a monomer or oligomer selected from norbornene, cycloalkene, cycloalkadiene, cycloalkatriene, cycloalkatetraene, aromatic-containing cycloolefin and mixtures thereof.

19. A method according to claim 18 wherein the metathesizable material has a structure represented by 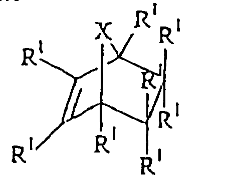 or 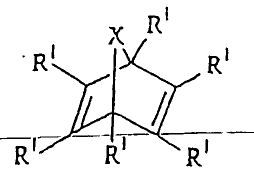 or 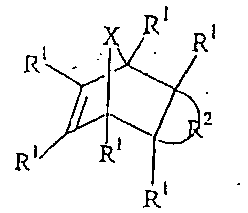 or 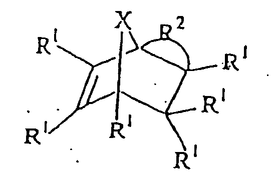 or 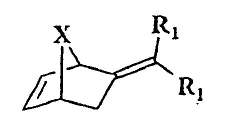 wherein X is CH₂, CHR³, C(R³)₂, O, S, N-R³, P-R³, O=P-R³, Si(R³)₂, B-R³ or As-R³; each R¹ is independently H, CH₂, alkyl, alkenyl, cycloalkyl, cycloalkenyl, aryl, alkaryl, aralkyl, halogen, halogenated alkyl, halogenated alkenyl, alkoxy, oxyalkyl, carboxyl, carbonyl, amido, (meth)acrylate-containing group, anhydride-containing group, thioalkoxy, sulfoxide, nitro, hydroxy, keto, carbarnato, sulfonyl, sulfinyl, carboxylate, silanyl, cyano or imido; R² is a fused aromatic, aliphatic or heterocyclic or polycyclic ring; and R³ is alkyl, alkenyl, cycloalkyl, cycloalkenyl, aryl, alkaryl, aralkyl or alkoxy..

20. A method according to claim 17 wherein the metathesizable material comprises ethylidenenorbornene monomer or oligomer, dicyclopentadiene or bicyclo[2.2.1]hept-5-en-2-yl-trichlorosilane.

21. A method according to any one of claims 1 to 20 for bonding the fibrous substrate to an elastomeric substrate comprising:
(a) applying the catalyst on the fibrous substrate;
(b) contacting the catalyst on the fibrous substrate with the metathesizable material so that the metathesizable material undergoes a metathesis reaction forming a polymer coated fibrous substrate,
(c) contacting the polymer coated fibrous substrate with the elastomeric substrate to form the composite material; and
(d) curing said composite material.

22. A method according to claim 21 wherein the elastomeric substrate is natural rubber or ethylene-propylene-diene terpolymer rubber.

23. A method according to claim 21 wherein steps (a) and (b) take place at room temperature.

24. A manufactured article obtainable by the method according to any of claims 1 to 23.

25. A manufactured article according to claim 24 comprising a fibrous substrate sandwiched between and bonded to a second substrate surface and a third substrate and an adhesive layer interposed between the fibrous substrate and the second substrate and the third substrate wherein the second and third substrate comprise a rubber material and the adhesive layer comprises a metathesis polymer.

26. A manufactured article according to claim 25 wherein the metathesis polymer is produced from a norbornene monomer having a structure represented by 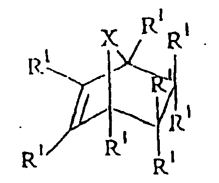 or 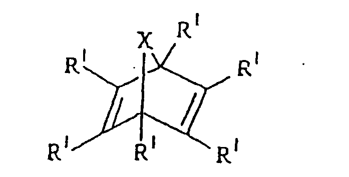 or 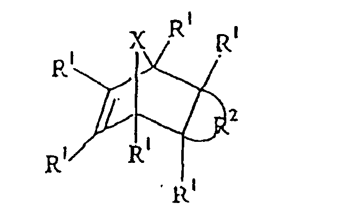 or 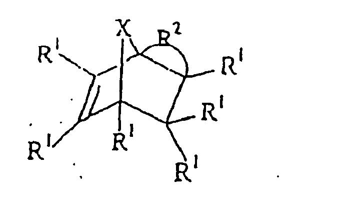 or 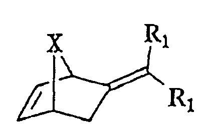 wherein X is CH₂, CHR³, C(R³)₂, O, S, N-R³, P-R³, O=P-R³, Si(R³)₂, B-R³ or As-R³; each R¹ is independently H, CH₂, alkyl, alkenyl, cycloalkyl, cycloalkenyl, aryl, alkaryl, aralkyl, halogen, halogenated alkyl, halogenated alkenyl, alkoxy, oxyalkyl, carboxyl, carbonyl, amido, (meth)acrylate-containing group, anhydride-containing group, thioalkoxy, sulfoxide, nitro, hydroxy, keto, carbamato, sulfonyl, sulfinyl, carboxylate, silanyl, cyano or imido; R² is a fused aromatic, aliphatic or heterocyclic or polycyclic ring; and R³ is alkyl, alkenyl, cycloalkyl, cycloalkenyl, aryl, alkaryl, aralkyl or alkoxy.

27. A manufactured article according to claim 25 wherein the metathesis polymer is produced from a norbornene monomer comprising ethylidenenorbornene, dicyclopentadiene or bicyclo[2.2.1]hept-5-en-2-yl-trichlorosilane.

## Revendications

1. Procédé pour lier un substrat fibreux entre un second et un troisième substrat en élastomère comprenant:
(a) l'application d'un catalyseur à la surface du substrat fibreux ;
(b) la mise en contact du catalyseur sur la surface du substrat fibreux avec une substance pouvant subir une réaction de métathèse de sorte que la substance pouvant subir une réaction de métathèse subit une réaction de métathèse en formant un substrat fibreux revêtu de polymère ;
(c) l'intercalation du substrat fibreux revêtu de polymère entre les surfaces du second et du troisième substrat ;
(d) la mise en place du matériau composite obtenu par l'étape (c) dans un moule; et
(e) le durcissement du matériau composite à la chaleur et sous Pression.

2. Procédé selon la revendication 1 où le substrat fibreux comprend des fibres de verre, du carbone, du polyéthylène, du polyester, du nylon ou du polyamide.

3. Procédé selon la revendication 1 où l'élastomère est amené à s'écouler à travers une matrice fibreuse.

4. Procédé selon la revendication 3 où le substrat élastomère est choisi dans le groupe consistant en le caoutchouc naturel, le polychloroprène, le polybutadiène, le polyisoprène, un caoutchouc de copolymère styrène-butadiene, un caoutchouc de copolymère acrylonitrile-butadiène, un caoutchouc de copolymère éthylène-propylène, un caoutchouc de terpolymère éthylène-propylène-diène, un caoutchouc butyl, un caoutchouc butyl bromé, un caoutchouc de polyéthylène chlorosulfoné alkylé, un caoutchouc nitrile hydrogéné, le poly(acrylate de n-butyle), un élastomère thermoplastique et leurs mélanges.

5. Procédé selon la revendication 3 où le substrat élastomère est du caoutchouc naturel ou un caoutchouc de terpolymère éthylène-propylène-diène.

6. Procédé selon la revendication 1 où l'étape (a) comprend l'imprégnation du substrat fibreux dans une solution de catalyseur et l'étape (b) comprend l'immersion du substrat fibreux imprégné de catalyseur dans une substance pouvant subir une réaction de métathèse, et la polymérisation.

7. Procédé selon la revendication 1 où l'étape (c) comprend la mise en place du substrat fibreux entre deux couches de surface du second substrat dans un moule et le durcissement de la surface du second substrat à la chaleur et sous pression.

8. Procédé selon la revendication 1 où le catalyseur est dissous ou mélangé dans un fluide de support liquide.

9. Procédé selon la revendication 1 où le catalyseur est inclus comme composant du premier substrat fibreux.

10. Procédé selon la revendication 1 où le catalyseur est choisi parmi au moins un composé parmi un composé du rhénium, un composé du ruthénium, un composé de l'osmium, un composé du molybdène, un composé du tungstène, un composé du titane, un composé du niobium, un composé de l'iridium et MgCl₂.

11. Procédé selon la revendication 10 où le catalyseur a une structure représentée par 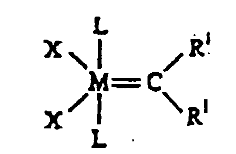 où M est Os, Ru ou Ir ; chaque R¹ est identique ou différent et est H, alcényle, alcynyle, alkyle, aryle, alkylaryle, aralkyle, carboxylate, alcoxy, allénylidényle, indényle, alkylalcénylcarboxy, alcénylalcoxy, alcénylaryle, alcynylalcoxy, aryloxy, alcoxycarbonyle, alkylthio, alkylsulfonyle, alkylsulfinyle, amino ou amido ; X est identique ou différent et est un groupe ligand anionique ou un groupe ligand neutre ; et L est identique ou différent et est un groupe donneur d'électrons neutre.

12. Procédé selon la revendication 11 où X est Cl, Br, I, F, CN, SCN, N₃, O-alkyle ou O-aryle ; L est un cycle hétérocyclique ou Q(R²)ₐ où Q est P, As, Sb ou N ; R² est H, cycloalkyle, alkyle, aryle, alcoxy, arylate, amino, alkylamino, arylamino, amido ou un cycle hétérocyclique ; et a est 1, 2 ou 3 ; M est Ru; et R¹ est H, phényle, -CH=C(phényle)₂, -CH=C(CH₃)₂ ou -C(CH₃)₂(phényle).

13. Procédé selon la revendication 10 où le catalyseur est un carbène de ruthénium phosphine-substitué, un carbène de ruthénium imidazolylidène-substitué ou un carbène de ruthénium dihydroimidazolylidène-substitué.

14. Procédé selon la revendication 13 où le catalyseur est le dichlorure de bis(tricyclohexylphosphine)benzylidène ruthénium (IV), le dichlorure de tricyclohexylphosphine[1,3-bis(2,4,6-triméthylphényl)-4,5-dihydroimidazol-2-ylidène][benzylidène]ruthénium (IV) ou le dichlorure de tricyclohexylphosphine-[1,3-bis(2,3,6-triméthylphényl)-4,5-imidazol-2-ylidène][benzylidène]ruthénium (IV).

15. Procédé selon la revendication 1 où le catalyseur est stable en présence d'humidité et d'oxygène et peut initier la polymérisation de la substance pouvant subir une réaction de métathèse par contact à la température ambiante.

16. Procédé selon la revendication 1 où la substance pouvant subir une réaction de métathèse est choisie parmi l'éthène, un α-alcène, un alcène acyclique, un diène acyclique, l'acétylène, un alcène cyclique, un polyène cyclique et leurs mélanges.

17. Procédé selon la revendication 16 où la substance pouvant subir une réaction de métathèse comprend une cyclooléflne.

18. Procédé selon la revendication 17 où la substance pouvant subir une réaction de métathèse est un monomère ou oligomère choisi parmi le norbomène, un cycloalcène, un cycloalcadiène, un cycloalcatriène, un cycloalcatétraène, une cyclooléfine contenant un ou des aromatiques et leurs mélanges.

19. Procédé selon la revendication 18 où la substance pouvant subir une réaction de métathèse a une structure représentée par 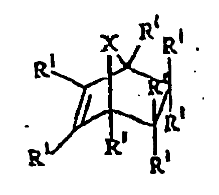 ou 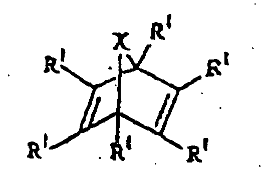 ou 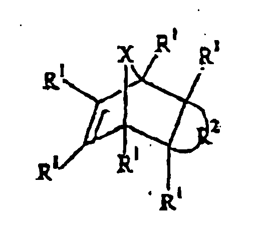 ou 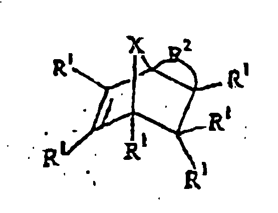 ou 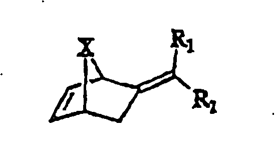 où X est CH₂, CHR³, C(R³)₂, O, S, N-R³, P-R³, O=P-R³, Si(R³)₂, B-R³ ou As-R³; chaque R¹ est indépendamment H, CH₂, alkyle, alcényle, cycloalkyle, cycloalcényle, aryle, alkylaryle, aralkyle, halogène, alkyle halogéné, alcényle halogéné, alcoxy, oxyalkyle, carboxyle, carbonyle, amido, un groupe contenant un ou des (méth)acrylates, un groupe contenant un ou des anhydrides, thioalcoxy, sulfoxyde, nitro, hydroxy, céto, carbamato, sulfonyle, sulfinyle, carboxylate, silanyle, cyano ou imido; R² est un cycle aromatique, aliphatique ou hétérocyclique ou polycyclique condensé ; et R³ est alkyle, alcényle, cycloalkyle, cycloalcényle, aryle, alkylaryle, aralkyle ou alcoxy.

20. Procédé selon la revendication 17 où la substance pouvant subir une réaction de métathèse comprend un monomère ou oligomère d'éthylidènenorbornène, le dicyclopentadiène ou le bicyclo[2.2.1]hept-5-én-2-yl-trichlorosilane.

21. Procédé selon l'une quelconque des revendications 1 à 20 pour lier le substrat fibreux à un substrat élastomère comprenant :
(a) l'application du catalyseur sur le substrat fibreux ;
(b) la mise en contact du catalyseur sur le substrat fibreux avec la substance pouvant subir une réaction de métathèse de sorte que la substance pouvant subir une réaction de métathèse subit une réaction de métathèse en formant un substrat fibreux revêtu de polymère,
(c) la mise en contact du substrat fibreux revêtu de polymère avec le substrat élastomère pour former le matériau composite ; et
(d) le durcissement dudit matériau composite.

22. Procédé selon la revendication 21 où le substrat élastomère est du caoutchouc naturel ou un caoutchouc de terpolymère éthylène-propylène-diène.

23. Procédé selon la revendication 21 où les étapes (a) et (b) se déroulent à la température ambiante.

24. Objet manufacturé pouvant être obtenu par le procédé selon l'une quelconque des revendications 1 à 23.

25. Objet manufacturé selon la revendication 24 comprenant un substrat fibreux intercalé entre et lié à une surface du second substrat et un troisième substrat et une couche adhésive disposée entre le substrat fibreux et le second substrat et le troisième substrat où le second substrat et le troisième substrat comprennent un matériau de type caoutchouc et la couche adhésive comprend un polymère de métathèse.

26. Objet manufacturé selon la revendication 25 où le polymère de métathèse est produit à partir d'un monomère de type norbomène ayant une structure représentée par 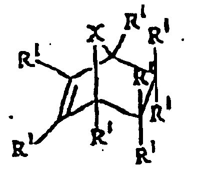 ou 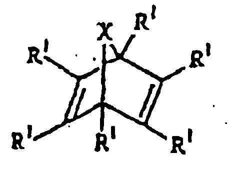 ou 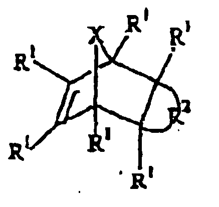 ou 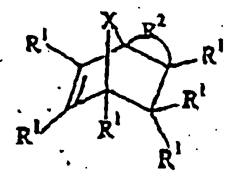 ou 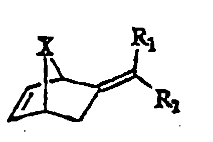 où X est CH₂, CHR³, C(R³)₂, O, S, N-R³, P-R³, O=P-R³, Si(R³)₂, B-R³ ou As-R³ ; chaque R¹ est indépendamment H, CH₂, alkyle, alcényle, cycloallcylé, cycloalcényile, aryle, alkylaryle, aralkyle, halogène, alkyle halogène, alcényle halogéné, alcoxy, oxyalkyle, carboxyle, carbonyle, amido, un groupe contenant un ou des (méth)acrylates, un groupe contenant un ou des anhydrides, thioalcoxy, sulfoxyde, nitro, hydroxy, céto, carbamato, sulfonyle, sulfinyle, carboxylate, silanyle, cyano ou imido ; R² est un cycle aromatique, aliphatique ou hétérocyclique ou polycyclique condensé ; et R³ est alkyle, alcényle, cycloalkyle, cycloalcényle, aryle, alkylaryle, aralkyle ou alcoxy.

27. Objet manufacturé selon la revendication 25 où le polymère de métathèse est produit à partir d'un monomère de type norbornène comprenant l'éthylidènenorbornène, le dicyclopentadiène ou le bicyclo[2.2.1]hept-5-én-2-yl-trichlorosilane.

## Patentansprüche

1. Verfahren zum Verkleben eines faserartigen Substrats zwischen einem zweiten und einem dritten elastomeren Substrat, umfassend das:
(a) Bereitstellen eines Katalysators an der Oberfläche des faserartigen Substrats;
(b) In-Kontakt-Bringen des Katalysators auf der Oberfläche des faserartigen Materials mit einem metathesierbaren Material, so dass das metathesierbare Material eine Metathesereaktion erfährt, wodurch ein polymerbeschichtetes faserartiges Substrat gebildet wird;
(c) Anordnen des polymerbeschichteten faserartigen Substrats zwischen den Flächen des zweiten und des dritten Substrats;
(d) Einbringen des durch Schritt (c) erhaltenen Verbundmaterials in eine Form und das
(e) Härten des Verbundmaterials unter Wärme und Druck.

2. Verfahren nach Anspruch 1, wobei das faserartige Substrat Faserglas, Kohlenstoff, Polyethylen, Polyester, Nylon oder Polyamid umfasst.

3. Verfahren nach Anspruch 1, wobei das Elastomer durch eine Fasermatrix fließen gelassen wird.

4. Verfahren nach Anspruch 3, wobei das elastomere Substrat aus der aus natürlichem Kautschuk, Polychloropren, Polybutadien, Polyisopren, Styrol-Butadien-Copolymer-Kautschuk, Acrylnitril-Butadien-Copolymer-Kautschuk, Ethylen-Propylen-Copoylmer-Kautschuk, Ethylen-Propylen-Dien-Terpolymer-Kautschuk, Butylkautschuk, bromiertem Butylkautschuk, alkyliertem, chlorsulfonierten Polyethylenkautschuk, hydriertem Nitrilkautschuk, Poly(n-butylacrylat), einem thermoplastischen Elastomer und Mischungen davon bestehenden Gruppe ausgewählt ist.

5. Verfahren nach Anspruch 3, wobei das elastomere Substrat ein natürlicher Kautschuk oder Ethylen-Propylen-Dien-Terpolymer-Kautschuk ist.

6. Verfahren nach Anspruch 1, wobei Schritt (a) das Durchtränken des faserartigen Substrats in einer Katalysatorlösung und Schritt (b) das Eintauchen des mit Katalysator durchtränkten faserartigen Substrats in ein metathesierbares Material und das Polymerisierenlassen umfasst.

7. Verfahren nach Anspruch 1, wobei Schritt (c) das Anordnen des faserartigen Substrats zwischen zwei Schichten aus einer zweiten Substratfläche in einer Form und das Härten der zweiten Substratfläche mittels Wärme und Druck umfasst.

8. Verfahren nach Anspruch 1, wobei der Katalysator in einer flüssigen Trägerflüssigkeit gelöst oder dieser zugemischt wird.

9. Verfahren nach Anspruch 1, wobei der Katalysator als Komponente auf dem ersten faserförmigen Substrat eingeschlossen ist.

10. Verfahren nach Anspruch 1, wobei der Katalysator aus wenigstens einer Verbindung, einer Rheniumverbindung, einer Rutheniumverbindung, einer Osmiumverbindung, einer Molybdänverbindung, einer Wolframverbindung, einer Titanverbindung, einer Niobverbindung, einer Iridiumverbindung und MgCl₂, ausgewählt ist.

11. Verfahren nach Anspruch 10, wobei der Katalysator eine Struktur hat, die durch 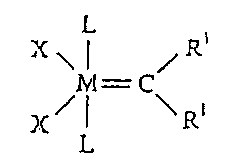 veranschaulicht ist, wobei M Os, Ru oder Ir ist; jedes R¹ gleich oder verschieden und H, ein Alkenyl, Alkinyl, Alkyl, Aryl, Alkaryl, Aralkyl, Carboxylat, Alkoxy, Allenylidenyl, Indenyl, Alkylalkenylcarboxy, Alkenylalkoxy, Alkenylaryl, Alkinylalkoxy, Aryloxy, Alkoxycarbonyl, Alkylthio, Alkylsulfonyl, Alkylsulfinyl, Amino oder Amido ist; X gleich oder verschieden ist und entweder eine anionische oder eine neutrale Ligandgruppe ist und L gleich oder verschieden und eine neutrale Elektronendonorgruppe ist.

12. Verfahren nach Anspruch 11, wobei X Cl, Br, I, F, CN, SCN, N₃, ein O-Alkyl oder ein O-Aryl ist; L ein heterocyclischer Ring oder Q(R²)ₐ ist, wobei Q P, As, Sb oder N ist; R² H, ein Cycloalkyl, Alkyl, Aryl, Alkoxy, Arylat, Amino, Alkylamino, Arylamino, Amido oder ein heterocyclischer Ring ist und a 1, 2 oder 3 ist; M Ru ist und R¹ H, Phenyl, -CH=C(phenyl)₂, -CH=C(CH₃)₂ oder -C(CH₃)₂(phenyl) ist.

13. Verfahren nach Anspruch 10, wobei der Katalysator ein phosphinsubstituiertes, ein imidazolylidensubstituiertes oder ein dihydroimidazolyllidensubstituiertes Rutheniumcarben ist.

14. Verfahren nach Anspruch 13, wobei der Katalysator Bis(tri-cyclohexylphosphin)benzylidenruthenium(IV)-dichlorid, Tricyclohexylphosphin[1,3-bis(2,4,6-trimethylphenyl)4,5-dihydroimidazol-2-yliden]-[benzyliden]ruthenium(IV)-dichlorid oder Tricyclohexylphosphin[1,3-bis(2,3,6-trimethylphenyl)-4,5-imidazol-2-yliden][benzyliden]ruthenium(IV)-dichlorid ist.

15. Verfahren nach Anspruch 1, wobei der Katalysator in Gegenwart von Feuchtigkeit und Sauerstoff stabil ist und eine Polymerisation des metathesierbaren Materials bei Kontakt bei Raumtemperatur initiieren kann.

16. Verfahren nach Anspruch 1, wobei das metathesierbare Material aus Ethen, einem α-Alken, acyclischen Alken, acyclischen Dien, Acetylen, einem cyclischen Alken, cyclischen Polyen und Mischungen davon ausgewählt ist.

17. Verfahren nach Anspruch 16, wobei das metathesierbare Material ein Cycloolefin umfasst.

18. Verfahren nach Anspruch 17, wobei das metathesierbare Material ein Monomer oder Oligomer ist, das aus Norbornen, einem Cycloalken, Cycloalkadien, Cycloalkatrien, Cycloalkatetraen, aromatenhaltigen Cycloolefin und Mischungen davon ausgewählt ist.

19. Verfahren nach Anspruch 18, wobei das metathesierbare Material eine Struktur hat, die durch 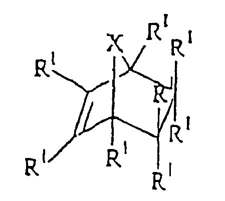 oder 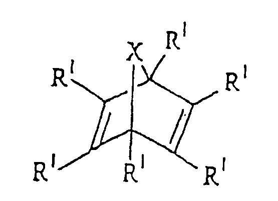 oder 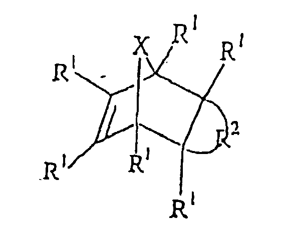 oder 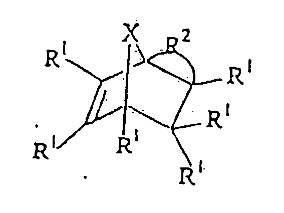 oder 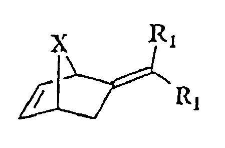 veranschaulicht ist, wobei X CH₂, CHR³, C(R³)₂, O, S, N-R³, P-R³, O=P-R³, Si(R³)₂, B-R³ oder As-R³ ist; jedes R¹ unabhängig H, CH₂, ein Alkyl, Alkenyl, Cycloalkyl, Cycloalkenyl, Aryl, Alkaryl, Aralkyl, Halogen, halogeniertes Alkyl, halogeniertes Alkenyl, Alkoxy, Oxyalkyl, Carboxyl, Carbonyl, Amido, eine ein (Meth)Acrylat enthaltende Gruppe, eine anhydridhaltige Gruppe, Thioalkoxy, Sulfoxid, Nitro, Hydroxy, Keto, Carbamato, Sulfonyl, Sulfinyl, Carboxylat, Silanyl, Cyan oder Imido ist; R² ein kondensierter aromatischer, aliphatischer oder heterocyclischer oder polycyclischer Ring ist und R³ ein Alkyl, Alkenyl, Cycloalkyl, Cycloalkenyl, Aryl, Alkaryl, Aralkyl oder Alkoxy ist.

20. Verfahren nach Anspruch 17, wobei das metathesierbare Material ein Ethylidennorbornen-Monomer oder -oligomer, Dicyclopentadien oder Bicyclo[2.2.1]hept-5-en-2-yl-trichlorsilan umfasst.

21. Verfahren nach einem der Ansprüche 1 bis 20 zum Verkleben des faserartigen Substrats mit einem elastomeren Substrat, umfassend das:
(a) Auftragen des Katalysators auf das faserartige Substrat;
(b) In-Kontakt-Bringen des Katalysators auf dem faserartigen Substrat mit dem metathesierbaren Material, so dass das metathesierbare Material eine Metathesereaktion erfährt, wodurch ein polymerbeschichtetes faserartiges Substrat gebildet wird;
(c) In-Kontakt-Bringen des polymerbeschichteten faserartigen Substrats mit dem elastomeren Substrat unter Bildung des Verbundmaterials und das
(d) Härten des Verbundmaterials.

22. Verfahren nach Anspruch 21, wobei das elastomere Material ein natürlicher Kautschuk oder ein Ethylen-Propylen-Dien-Terpolymer-Kautschuk ist.

23. Verfahren nach Anspruch 21, wobei die Schritte (a) und (b) bei Raumtemperatur erfolgen.

24. Erzeugnis, erhältlich durch das Verfahren nach einem der Ansprüche 1 bis 23.

25. Erzeugnis nach Anspruch 24, umfassend ein faserartiges Substrat, das zwischen einer Fläche eines zweiten Substrats und einem dritten Substrat angeordnet und damit verklebt ist, und eine Klebschicht, die zwischen dem faserartigen Substrat und dem zweiten Substrat und dem dritten Substrat angeordnet ist, wobei das zweite und das dritte Substrat ein Kautschukmaterial umfassen und wobei die Klebschicht ein Metathesepolymer umfasst.

26. Erzeugnis nach Anspruch 25, wobei das Metathesepolymer aus einem Norbornenmonomer mit einer Struktur hergestellt ist, die durch 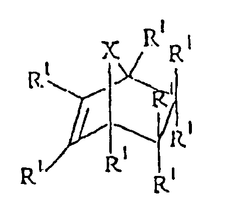 oder 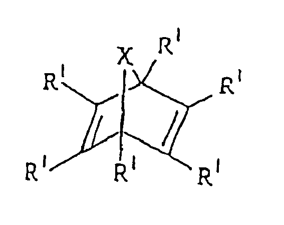 oder 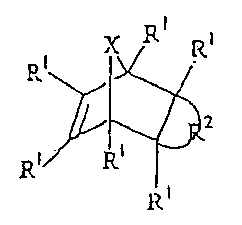 oder 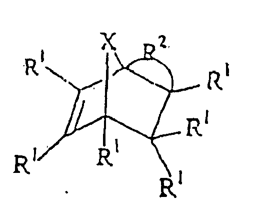 oder 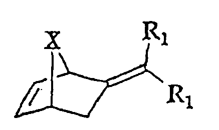 veranschaulicht ist, wobei X CH₂, CHR³, C(R³)₂, O, S, N-R³, P-R³, O=P-R³, Si(R³)₂, B-R³ oder As-R³ ist; jedes R¹ unabhängig H, CH₂, ein Alkyl, Alkenyl, Cycloalkyl, Cycloalkenyl, Aryl, Alkaryl, Aralkyl, Halogen, halogeniertes Alkyl, halogeniertes Alkenyl, Alkoxy, Oxyalkyl, Carboxyl, Carbonyl, Amido, eine ein (Meth)Acrylat enthaltende Gruppe, eine anhydridhaltige Gruppe, Thioalkoxy, Sulfoxid, Nitro, Hydroxy, Keto, Carbamato, Sulfonyl, Sulfinyl, Carboxylat, Silanyl, Cyan oder Imido ist; _{R}² ein kondensierter aromatischer, aliphatischer oder heterocyclischer oder polycyclischer Ring ist und R³ ein Alkyl, Alkenyl, Cycloalkyl, Cycloalkenyl, Aryl, Alkaryl, Aralkyl oder Alkoxy ist.

27. Erzeugnis nach Anspruch 25, wobei das Metathesepolymer aus einem Norbornenmonomer hergestellt ist, das Ethylidennorbornen, Dicyclopentadien oder Bicyclo[2.2.1]hept-5-en-2-yltrichlorsilan umfasst.
